(19) **Europäisches Patentamt / European Patent Office / Office européen des brevets**

(11) **EP 4 645 106 A1**

(12) **EUROPEAN PATENT APPLICATION**
published in accordance with Art. 153(4) EPC

(43) Date of publication:
**05.11.2025 Bulletin 2025/45**

(21) Application number: **23917102.8**

(22) Date of filing: **19.10.2023**

(51) International Patent Classification (IPC):
**G06F 16/242** $^{(2019.01)}$   **G06N 3/0464** $^{(2023.01)}$

(52) Cooperative Patent Classification (CPC):
**G06F 16/242; G06F 16/2453; G06F 18/214; G06N 3/0464**

(86) International application number:
**PCT/CN2023/125468**

(87) International publication number:
**WO 2024/152634 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **18.01.2023 CN 202310096561**

(71) Applicant: **Huawei Technologies Co., Ltd.**
**Shenzhen, Guangdong 518129 (CN)**

(72) Inventors:
• **SUN, Ji**
  **Shenzhen, Guangdong 518129 (CN)**
• **LI, Shifu**
  **Shenzhen, Guangdong 518129 (CN)**
• **LI, Guoliang**
  **Shenzhen, Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(54) **METHOD AND DEVICE FOR SELECTING EXECUTION PLAN**

(57) Embodiments of this application provide a method for selecting an execution plan and a database system. The method is applied to the database system. The method includes: determining estimated values of execution costs of a plurality of execution plans corresponding to a query, where an estimated value of an execution cost of a first operator in a first execution plan in the plurality of execution plans is obtained by inputting an eigenvalue of a target feature of the first operator into a first cost model for processing, the first cost model is deployed on the database system, and the first cost model is obtained through training based on a first training dataset; and determining a target execution plan from the plurality of execution plans based on the estimated values of the execution costs of the plurality of execution plans. The solutions in embodiments of this application help improve accuracy of estimating the execution cost while ensuring processing efficiency.

200

| Obtain a query submitted by a user | 210 |

| Generate a plurality of execution plans corresponding to the query | 220 |

| Determine an estimated value of an execution cost of each execution plan based on an estimated value of an execution cost of an operator in each execution plan in the plurality of execution plans, where an estimated value of an execution cost of a first operator in a first execution plan in the plurality of execution plans is obtained by inputting an eigenvalue of a target feature of the first operator into a cost model for processing | 230 |

| Determine a target execution plan based on the estimated values of the execution costs of the plurality of execution plans | 240 |

| Execute the target execution plan | 250 |

| Collect a parameter value of a running parameter of a second operator in the target execution plan | 260 |

FIG. 2

## Description

This application claims priority to Chinese Patent Application No. 202310096561.5, filed with the China National Intellectual Property Administration on January 18, 2023 and entitled "METHOD FOR SELECTING EXECUTION PLAN AND APPARATUS", which is incorporated herein by reference in its entirety.

## TECHNICAL FIELD

Embodiments of this application relate to the field of data processing technologies, and more specifically, to a method for selecting an execution plan and an apparatus.

## BACKGROUND

A query is one of most frequent operations in a database. One query statement usually corresponds to a plurality of execution plans. An optimizer in the database selects a better execution plan from the plurality of execution plans and delivers the better execution plan to an executor for execution, to improve query performance of the database. Usually, a database system uses a cost-based optimizer. Specifically, the optimizer estimates a cost of the execution plan by using a cost model, and selects an execution plan with a lowest cost to deliver the execution plan to the executor for execution. Performance of the cost model affects accuracy of cost estimation.

The execution plan includes one or more operators. The operator is a database operator, is an independent unit for executing the execution plan, and is used to execute a specific action. The cost of the execution plan may be determined by estimating a cost of each operator in the execution plan. In a related solution, the database system uses a central processing unit (central processing unit, CPU) cost model and an input/output (input output, IO) cost model as cost models, and performs, by using a preset value, weighted summation on a CPU cost and an IO cost that are calculated by using the two cost models, to obtain the cost of the operator. The cost model in this solution is a linear function that is based on a cardinality of the operator and a fixed parameter in a fixed parameter list. The cardinality of the operator refers to a number of data rows that need to be accessed by the operator, for example, a number of rows read by the operator or a number of rows calculated by the operator. Specifically, the cost model may invoke a cardinality estimator to obtain an estimated value of the number of data rows that need to be accessed by the operator, and read a parameter value of the fixed parameter from the fixed parameter list, for example, a CPU cost required for processing a piece of data, or a cost for reading a data page, to calculate the cost of the operator. However, the fixed parameter list has a small number of parameters, and an actual application scenario is usually complex. A linear function based on the small number of parameters cannot accurately fit the cost model, and therefore cannot accurately estimate the cost, affecting selection of the execution plan.

Therefore, how to accurately estimate the cost of the execution plan becomes an urgent problem to be resolved.

## SUMMARY

Embodiments of this application provide a method for selecting an execution plan and an apparatus. This solution helps accurately estimate an execution cost of an operator, and helps predict an accurate execution cost of the execution plan, to determine a more proper target execution plan, thereby improving query performance of a database.

According to a first aspect, a method for selecting an execution plan is provided, where the method is applied to a database system, and the method includes: obtaining a plurality of execution plans corresponding to a query submitted by a user; determining an estimated value of an execution cost of each execution plan based on an estimated value of an execution cost of an operator in each execution plan in the plurality of execution plans, where an estimated value of an execution cost of a first operator in a first execution plan in the plurality of execution plans is obtained by inputting an eigenvalue of a target feature of the first operator into a first cost model for processing, the first cost model is deployed on the database system, and the first cost model is obtained through training based on a first training dataset; and determining a target execution plan from the plurality of execution plans based on the estimated values of the execution costs of the plurality of execution plans.

The plurality of execution plans may be used to execute the query, to obtain a query result requested by the query.

For example, the execution cost may include any one or more of a CPU cost, an IO cost, or the like.

For example, the execution cost may be an execution time.

The estimated value of the cost of the execution plan is determined based on an estimated value of a cost of each operator in the execution plan.

The first execution plan may be any execution plan in the plurality of execution plans.

The first operator may be any operator in the first execution plan.

For example, the first cost model may be a lightweight machine learning algorithm model in the database.

For example, the first cost model may be a polynomial regression model, a linear regression model with a non-linear kernel, a logistic (logistic) regression model with a non-linear kernel, or the like.

In this embodiment of this application, the cost model may be deployed on the database. In this way, an external model does not need to be invoked, to avoid a security problem that may exist in external invoking and improve system reliability. In addition, the cost model needs to be invoked for a plurality of times in a query optimization process, and the cost model deployed on the database can reduce an invoking cost and improve invoking efficiency, thereby ensuring overall performance of the database system. In addition, the cost model is obtained through training based on training data, and can be applied to different operators. This helps accurately fit a relationship between the eigenvalue of the target feature of the operator and the execution cost of the operator, thereby accurately estimating the execution cost of the operator. This helps predict an accurate execution cost of the execution plan, and further helps determine a more proper target execution plan, thereby improving query performance of the database.

With reference to the first aspect, in some implementations of the first aspect, the first training dataset includes one or more pieces of first training data. The first training data includes an eigenvalue of a target feature of a first sample operator and an execution cost of the first sample operator in an actual execution process.

The execution cost of the first sample operator in the actual execution process may be used as a true value of the execution cost of the first sample operator.

For example, the eigenvalue of the target feature of the first sample operator is input into a to-be-trained model for processing, to obtain an estimated value of the execution cost of the first sample operator. To reduce a difference between the estimated value of the execution cost of the first sample operator and the true value of the execution cost of the first sample operator, the to-be-trained model is trained, that is, a parameter of the to-be-trained model is adjusted, to obtain a trained model, that is, the first cost model.

According to the solution in this embodiment of this application, the first cost model may be obtained through training based on the eigenvalue of the target feature of the first sample operator and the execution cost of the first sample operator in the actual execution process. The cost model can better fit a relationship between the target feature of the operator and the real execution cost of the operator. This helps more accurately estimate the execution cost of the operator, helps obtain a more accurate execution cost of the execution plan, and further helps determine a more proper target execution plan, thereby improving query performance.

With reference to the first aspect, in some implementations of the first aspect, the target feature of the first operator is determined through feature selection.

Optionally, the target feature of the first operator may be determined through feature selection performed on a feature set based on a decision tree.

In this embodiment of this application, feature selection may be performed based on the decision tree, and one or more features with a highest correlation with the execution cost of the operator are selected from the feature set of the operator as the target feature, or one or more features that have greatest impact on the execution cost of the operator are selected from the feature set of the operator as the target feature. In this way, a number of features that are used as input of the cost model can be reduced, and difficulty of a learning task of the cost model is reduced, that is, complexity of the cost model is reduced. In addition, in this embodiment of this application, a feature with a low correlation is removed, so that a risk of overfitting can be reduced as much as possible, thereby helping improve accuracy of predicting the cost model.

With reference to the first aspect, in some implementations of the first aspect, the target feature of the first operator may include at least one of the following: a cardinality of the first operator, an operator type of the first operator, a degree of parallelism of the first operator, a loopcount of the first operator, a number of select times at an execution moment of the first operator, a number of update times at an execution moment of the first operator, a number of insert times at an execution moment of the first operator, or the like.

With reference to the first aspect, in some implementations of the first aspect, the target feature of the first operator includes at least one of the following: system central processing unit CPU usage corresponding to the first operator, input/output IO bandwidth corresponding to the first operator, or memory usage corresponding to the first operator.

In this embodiment of this application, the target feature of the first operator may include a system parameter corresponding to the first operator, and the system parameter corresponding to the first operator is used as input of the cost model. In this way, impact of a system environment can be considered when the cost of the first operator is estimated, thereby improving accuracy of predicting the cost model.

With reference to the first aspect, in some implementations of the first aspect, the target feature of the first operator includes a cardinality of the first operator, an estimated value of the cardinality of the first operator is determined by using a cardinality model, and the cardinality model is a mixture model.

For example, the cardinality model may be a mixture uniform distribution model, a mixture Gaussian distribution model, or the like.

The mixture model is a lightweight model, and is simple to be solved, and can implement fast solving. This helps quickly predict a value of the cardinality, and further helps improve efficiency of cost estimation.

With reference to the first aspect, in some implementations of the first aspect, the method further includes: executing the target execution plan; and collecting a parameter value of a running parameter of a second operator in the target execution plan, where the parameter value of the running parameter of the second operator is used to train or optimize the first cost model.

In this embodiment of this application, the parameter value of the running parameter of the second operator in the target execution plan may be collected, to subsequently adjust the first cost model and the like.

With reference to the first aspect, in some implementations of the first aspect, a difference between an estimated value of an execution cost of the second operator and a true value of the execution cost of the second operator is greater than or equal to a first threshold, and the estimated value of the execution cost of the second operator is obtained by inputting an eigenvalue of a target feature of the second operator into the first cost model for processing.

In this embodiment of this application, a parameter value of a running parameter of an operator whose estimated cost differs greatly from a real cost may be collected. In this way, performance of the cost model can be monitored. For example, performance of the cost model may be monitored based on a number of collected second operators. For example, if a large number of second operators are collected within a specific time, the cost model may not be suitable for a current running environment, or a data distribution of training data of the cost model is inconsistent with a data distribution of current input data of the cost model, and performance of the cost model deteriorates. Alternatively, performance of the cost model may be monitored based on the difference between the estimated value of the execution cost of the second operator and the true value of the execution cost of the second operator. For example, if the difference between the estimated value of the execution cost of the second operator and the true value of the execution cost of the second operator is large, the cost model may not be suitable for a current running environment, that is, performance of the cost model deteriorates.

With reference to the first aspect, in some implementations of the first aspect, the method further includes: storing the collected parameter value of the running parameter of the second operator in an internal memory.

For example, the parameter value of the running parameter of the second operator may be stored in a hash table in the internal memory.

In this embodiment of this application, the running parameter of the second operator may be collected by using the hash table, and different second operators correspond to different hash values. In this way, it can be ensured that a same operator is not stored for a plurality of times, that is, a deduplication operation can be implemented.

With reference to the first aspect, in some implementations of the first aspect, the method further includes: flushing the parameter value that is of the running parameter of the second operator and that is stored in the internal memory into an external memory.

With reference to the first aspect, in some implementations of the first aspect, the running parameter of the second operator includes at least one of the following: system central processing unit CPU usage corresponding to the second operator, input/output IO bandwidth corresponding to the second operator, or memory usage corresponding to the second operator.

With reference to the first aspect, in some implementations of the first aspect, the running parameter of the second operator includes execution context information of the second operator; and collecting the parameter value of the running parameter of the second operator in the target execution plan includes: attempting to obtain a lock before collecting the parameter value of the running parameter of the second operator; and when the lock is obtained, collecting the parameter value of the running parameter of the second operator.

Optionally, when the lock is not obtained, the collection step is skipped.

In this way, only a thread that holds a lock is performing a collection step at a same moment. For example, only one thread can hold a lock at a same moment, that is, only one thread is performing a collection step at a same moment, and collection of different threads does not conflict. This avoids problems such as lock contention and lock waiting that may exist in a high-concurrency read/write scenario, and does not block normal execution of another thread, and can ensure query performance.

With reference to the first aspect, in some implementations of the first aspect, the method further includes: performing incremental training or full training on the first cost model based on a second training dataset, to obtain a second cost model, where training data in the second training dataset is determined based on the parameter value of the running parameter of the second operator; and replacing the first cost model with the second cost model.

According to the solution in this embodiment of this application, the running parameter of the second operator may be collected in an execution process of the target execution plan. For example, the second operator may be an operator with a large cost estimation error, and incremental training is performed on the cost model based on the collected running parameter of the second operator. In this way, a parameter of the cost model can be quickly adjusted, so that the cost model can better adapt to a current running environment, for example, better adapt to a data distribution, a load distribution, or a system hardware environment in a current database system, to improve adaptability of the cost model, thereby ensuring accuracy of predicting the cost model. Alternatively, full training is performed on the cost model based on the collected running parameter of the second operator, to update the cost model. In this way, the cost model can better adapt to a current running environment, for example, better adapt to a data distribution, a load distribution, or a system hardware environment in a current database system, to improve adaptability of the cost model, thereby ensuring accuracy of predicting the cost model.

With reference to the first aspect, in some implementations of the first aspect, the method further includes: performing hyperparameter optimization on the first cost model based on a third training dataset, to obtain a third cost model, where training data in the third training dataset is determined based on the parameter value of the running parameter of the second operator; and replacing the first cost model with the third cost model.

According to the solution in this embodiment of this application, the running parameter of the second operator may be collected in an execution process of the target execution plan, and hyperparameter optimization is performed on the cost model based on the collected running parameter of the second operator. In this way, the cost model can better adapt to a current running environment, for example, better adapt to a data distribution, a load distribution, or a system hardware environment in a current database system, to improve adaptability of the cost model, thereby ensuring accuracy of predicting the cost model.

With reference to the first aspect, in some implementations of the first aspect, the method further includes: performing feature selection on a feature set based on a fourth training dataset, where training data in the fourth training dataset is determined based on the parameter value of the running parameter of the second operator; and replacing the target feature with a selected feature.

According to the solution in this embodiment of this application, the running parameter of the operator may be collected in an execution process of the target execution plan, and feature selection is performed based on the collected running parameter of the operator, to update the target feature. In this way, a more accurate target feature can be obtained, so that the cost model can better adapt to a current running environment, for example, better adapt to a data distribution, a load distribution, or a system hardware environment in a current database system, to improve adaptability of the cost model, thereby ensuring accuracy of predicting the cost model.

According to a second aspect, a database system is provided, including: a cost estimation module, configured to determine an estimated value of an execution cost of each execution plan based on an estimated value of an execution cost of an operator in each execution plan in a plurality of execution plans corresponding to a query submitted by a user, where an estimated value of an execution cost of a first operator in a first execution plan in the plurality of execution plans is obtained by inputting an eigenvalue of a target feature of the first operator into a first cost model for processing, the first cost model is deployed on the database system, and the first cost model is obtained through training based on a first training dataset; and a selection module, configured to determine a target execution plan from the plurality of execution plans based on the estimated values of the execution costs of the plurality of execution plans.

With reference to the second aspect, in some implementations of the second aspect, the first training dataset includes one or more pieces of first training data, and the first training data includes an eigenvalue of a target feature of a first sample operator and an execution cost of the first sample operator in an actual execution process.

With reference to the second aspect, in some implementations of the second aspect, the target feature of the first operator includes a system parameter corresponding to the first operator, and the system parameter corresponding to the first operator includes at least one of the following: system central processing unit CPU usage corresponding to the first operator, input/output IO bandwidth corresponding to the first operator, or memory usage corresponding to the first operator.

With reference to the second aspect, in some implementations of the second aspect, the target feature of the first operator includes a cardinality of the first operator, an estimated value of the cardinality of the first operator is determined by using a cardinality model, and the cardinality model is a mixture model.

With reference to the second aspect, in some implementations of the second aspect, the database system further includes: an execution module, configured to execute the target execution plan; and a collection module, configured to collect a parameter value of a running parameter of a second operator in the target execution plan, where the parameter value of the running parameter of the second operator is used to train or optimize the first cost model.

With reference to the second aspect, in some implementations of the second aspect, a difference between an estimated value of an execution cost of the second operator and a true value of the execution cost of the second operator is greater than or equal to a first threshold, and the estimated value of the execution cost of the second operator is obtained by inputting an eigenvalue of a target feature of the second operator into the first cost model for processing.

With reference to the second aspect, in some implementations of the second aspect, the running parameter of the second operator includes a system parameter corresponding to the second operator, and the system parameter corresponding to the second operator includes at least one of the following: system central processing unit CPU usage corresponding to the second operator, input/output IO bandwidth corresponding to the second operator, or memory usage corresponding to the second operator.

With reference to the second aspect, in some implementations of the second aspect, the running parameter of the second operator includes execution context information of the second operator; and the collection module is specifically configured to: attempt to obtain a lock before collecting the parameter value of the running parameter of the second operator; and when the lock is obtained, collect the parameter value of the running parameter of the second operator.

With reference to the second aspect, in some implementations of the second aspect, the database system further includes a first management module, configured to: perform incremental training or full training on the first cost model based on a second training dataset, to obtain a second cost model, where training data in the second training dataset is determined based on the parameter value of the running parameter of the second operator; and replace the first cost model with the second cost model.

With reference to the second aspect, in some implementations of the second aspect, the database system further includes a second management module, configured to: perform hyperparameter optimization on the first cost model based on a third training dataset, to obtain a third cost model, where training data in the third training dataset is determined based on the parameter value of the running parameter of the second operator; and replace the first cost model with the third cost model.

With reference to the second aspect, in some implementations of the second aspect, the database system further includes a third management module, configured to: perform feature selection on a feature set based on a fourth training dataset, where training data in the fourth training dataset is determined based on the parameter value of the running parameter of the second operator; and replace the target feature with a selected feature.

It should be understood that extensions, definitions, explanations, and descriptions of related content in the first aspect are also applicable to same content in the second aspect.

According to a third aspect, a computing device cluster is provided, including at least one computing device, and each computing device includes a processor and a memory. The processor of the at least one computing device is configured to execute instructions stored in the memory in the at least one computing device, so that the computing device cluster performs the method in any one of the implementations of the first aspect.

According to a fourth aspect, a computer-readable medium is provided, including computer program instructions. When the computer program instructions are executed by a computing device cluster, the computing device cluster performs the method in any one of the implementations of the first aspect.

According to a fifth aspect, a computer program product including instructions is provided. When the instructions are run by a computing device cluster, the computing device cluster is enabled to perform the method in any one of the implementations of the first aspect.

## BRIEF DESCRIPTION OF DRAWINGS

FIG. 1 is a block diagram of a database system according to an embodiment of this application;
FIG. 2 is a schematic flowchart of a method for selecting an execution plan according to an embodiment of this application;
FIG. 3 is a schematic flowchart of another method for selecting an execution plan according to an embodiment of this application;
FIG. 4 is a schematic block diagram of another database system according to an embodiment of this application;
FIG. 5 is a diagram of an architecture of a computing device according to an embodiment of this application; and
FIG. 6 is a diagram of an architecture of a computing device cluster according to an embodiment of this application.

## DESCRIPTION OF EMBODIMENTS

The following describes technical solutions of embodiments in this application with reference to accompanying drawings.

The method in embodiments of this application may be applied to the field of database query optimization.

To better describe the solutions in embodiments of this application, the following first describes terms that may be used in this application.

(1) Execution plan

After a user submits a query, a corresponding execution plan can be generated after the query passes through a parser. An optimizer can perform cost estimation on each execution plan to obtain an execution plan with a lowest cost.

The execution plan may also be referred to as a query plan or an explanation plan, and is a description of an execution process or an access path of a query statement in a database. For example, the query statement may be a structured query language (structured query language, SQL) sentence. Alternatively, the execution plan may be understood as a specific step of executing the query statement in the database. One step is one database operator, and may also be referred to as one execution operator or one operator. The operator is an independent unit for executing the execution plan and is used to implement a specific execution action. The operator can be represented by a node (node). The execution plan may include a plurality of types of operators. For example, the execution plan may include the following types of execution operators: a control operator, a scan operator, a materialization operator, a join operator, or the like. The scan operator is used as an example. The scan operator is used to scan a table object and obtain data from the table.

(2) Cost estimation

Cost estimation is a technology for estimating an execution cost for an SQL query plan or a part of sub-plans in advance in a database. In a database query optimization phase, execution cost estimation and optimal execution path selection are performed based on cost estimation, thereby improving overall execution performance of the database.
A total cost of one execution plan may be determined based on a cost of an operator in the execution plan. For example, a total cost of one execution plan may be a sum of costs of all operators in the execution plan.

(3) Cardinality estimation

A cardinality of an operator refers to a number of data rows to be accessed by the operator, for example, a number of rows that need to be read by the operator or a number of rows that need to be calculated by the operator. In other words, the cardinality of the operator may also be understood as a number of remaining rows after to-be-queried data is filtered based on a query condition in the operator. One column of data is used as an example. The cardinality may be used to represent uniqueness of data included in the column. If one column of data includes a large amount of duplicate data, for example, the column is a gender column, and data in the column includes only two types: male and female, a cardinality of the column of the data is low. If one column of data includes less duplicate data, for example, the column is a name column, and data in the column is less duplicate, a cardinality of the column of the data is high. If the cardinality is high, more rows can be filtered out during database search, thereby improving query efficiency and reducing a cost of the query. Therefore, the cardinality of the operator is an important basis for cost estimation.
Cardinality estimation is a technology for pre-estimating a number of result rows of an SQL query or sub-query before execution.

(4) Machine learning model

The machine learning model is a general term of a function set represented by using a numeric parameter. The machine learning model is used to implement mapping from a sample feature space to a sample marking space, so that a computer can learn a data distribution and implement inference.

(5) Model training

Any machine learning model needs to be trained before being used to resolve a specific technical problem. Training of the machine learning model is a process of calculating training data by using a specified initial model, and adjusting a parameter in the initial model by using a method based on a calculation result, so that the model gradually learns a rule and has a specific function. Specifically, a training sample set is given, a predicted value of a current model is compared with a true desired target value, and then a model parameter is updated based on a difference between the two values, until the model can predict the true desired target value or a value that is very close to the true desired target value, to obtain an optimal parameter set.

(6) Model inference

A machine learning model, obtained through training, with a stable function can be used for inference. Inference of the machine learning model is a process of calculating input data by using a trained machine learning model to obtain a predicted inference result. The model may be a function set.

(7) Decision tree

The decision tree is a basic classification and regression method. A decision tree model is in a tree structure. In a classification problem, the decision tree model indicates a process of classifying instances based on features. During learning, the decision tree model is established based on training data according to a loss function minimization principle.
Learning of the decision tree usually includes three steps: feature selection, generation of the decision tree, and pruning of the decision tree.
For feature selection, common feature selection indicators include an information gain, an information gain rate, and a Gini (Gini) impurity.

The decision tree usually uses indicators such as the information gain, the information gain rate, and the Gini impurity to determine which feature is used for data classification at each layer in the decision tree, so as to achieve a lowest error rate and effectively select a feature with a highest utility.

The Gini impurity is used as an example. The Gini impurity is an indicator used to measure a classification category error rate in regression or classification problems. The Gini impurity may also be referred to as a Gini coefficient, a Gini index, or a Gini value. A Gini index of one set reflects uncertainty of the set. Simply speaking, a Gini index of one set reflects a probability that category tags of two elements randomly selected from the set are inconsistent. In other words, a lower Gini index of one set indicates a higher purity of the set. The set may be divided into a plurality of subsets based on one feature. Under a condition of the feature, the Gini index of the set may reflect uncertainty of the set obtained through division based on the feature.

A method for performing feature selection based on the Gini index is to calculate a Gini index of a training dataset under a condition of each feature, and select a feature under which the Gini index of the training dataset is smallest. In the decision tree, the feature is used as a split node at a first layer. A sub-node obtained through splitting is calculated recursively according to a same algorithm until a termination condition is met. One or more features selected in this manner may be considered as one or more features that have greatest impact on accuracy of a classification result. The termination condition can be set as required. For example, the termination condition may be that a Gini index of each classification set obtained through division is less than or equal to a specified threshold. For another example, the termination condition may be that a number of selected features is greater than or equal to a specified threshold.

(8) Mixture uniform distribution model

A mixture model may be used to represent a probability model that includes a plurality of sub-distributions in an overall distribution. In other words, the mixture model represents a probability distribution of observed data in the whole, and is a mixture distribution formed by the plurality of sub-distributions.

The mixture model includes the mixture uniform distribution model. In the mixture uniform distribution model, the plurality of sub-distributions are uniform. Specifically, a mixture uniform distribution module uses a plurality of independent uniform distribution functions to represent a data distribution in space. In other words, a distribution density of each point in the space is obtained through weighted calculation on a plurality of uniform distribution densities. Uniform distribution means that in a given region, a density of each point is the same, and an integral (or a sum) of densities of all points is 1.

One query statement usually corresponds to a plurality of execution plans. An optimizer in a database selects a better execution plan from the plurality of execution plans and delivers the better execution plan to an executor for execution, to improve query performance of the database. Usually, a database system uses a cost-based optimizer. Specifically, the optimizer estimates a cost of the execution plan by using a cost model, and selects an execution plan with a lowest cost to deliver the execution plan to the executor for execution. Performance of the cost model affects accuracy of cost estimation.

In a related solution, the optimizer of the database system may invoke, based on an operator type, cost models corresponding to different operators, to implement cost estimation. The cost model is a linear function based on a cardinality and a fixed parameter. Specifically, the cost model may invoke a cardinality estimation model to obtain an estimated value of a number of rows (that is, a cardinality) of data that needs to be accessed, and read a parameter value of the fixed parameter from a fixed parameter list, for example, a CPU cost required for processing a piece of data, or a cost for reading a data page. The cost model may be used as a CPU model and an IO model. The optimizer may perform, by using a preset value, weighted summation on a CPU cost and an IO cost that are calculated by using the two cost models, to obtain a cost of the operator. However, the fixed parameter list has a small number of parameters, and an actual application scenario is usually complex. A linear function based on the small number of parameters cannot accurately fit the cost model, and therefore cannot accurately estimate the cost, affecting selection of the execution plan.

In view of this, embodiments of this application provide a method for selecting an execution plan, to help accurately estimate a cost of an execution plan, so as to select a better execution plan for execution, thereby improving performance of a database system.

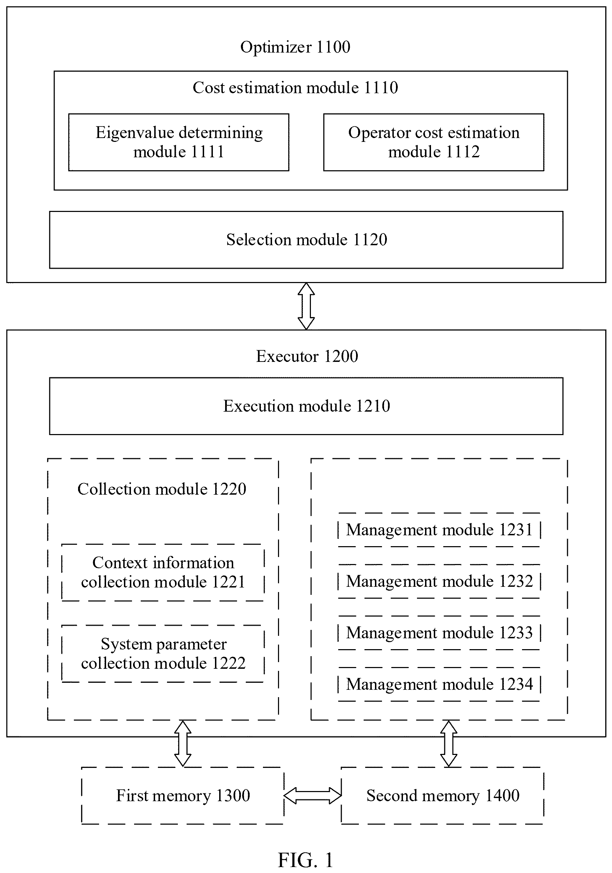

FIG. 1 is a block diagram of a system according to an embodiment of this application. As shown in FIG. 1, the system includes an optimizer 1100 and an executor 1200.

For example, the optimizer 1100 and the executor 1200 may be implemented in a form of software.

The optimizer 1100 may be configured to estimate execution costs of a plurality of execution plans corresponding to a query, determine a target execution plan based on estimated values of the execution costs of the plurality of execution plans, and deliver the target execution plan to the executor 1200 for execution.

As shown in FIG. 1, the optimizer 1100 may include a cost estimation module 1110 and a selection module 1120.

The cost estimation module 1110 is configured to determine an estimated value of an execution cost of each execution plan.

For example, the cost estimation module 1110 may include an eigenvalue determining module 1111 and an operator cost estimation module 1112.

The eigenvalue determining module 1111 is configured to determine an eigenvalue of a target feature of an operator in the execution plan.

For example, the eigenvalue determining module 1111 may determine the eigenvalue of the target feature of the operator in the execution plan based on a running parameter of the system and the like.

For example, the running parameter of the system may be represented in a form of a system table, a system function, a view, or the like.

The operator cost estimation module 1112 may be configured to estimate an execution cost of the operator based on the eigenvalue that is of the target feature of the operator and that is determined by the eigenvalue determining module 1111, or configured to determine an estimated value of the execution cost of the operator.

For example, the operator cost estimation module 1112 may input the eigenvalue of the target feature of the operator into a cost model for processing, to obtain the estimated value of the execution cost of the operator. The first cost model is deployed on a database system. The first cost model may be obtained through training based on a first training dataset.

One operator may have one or more target features.

Optionally, the eigenvalue determining module 1111 may include a cardinality model. The target feature of the operator may include a cardinality of the operator. The cardinality of the operator is a number of rows accessed by the operator. The cardinality model may be used to estimate a value of the cardinality of the operator, or to determine an estimated value of the cardinality of the operator.

Optionally, the cardinality model may be a mixture model, for example, a mixture uniform distribution model.

The selection module 1120 is configured to determine the target execution plan based on the estimated values of the execution costs of the plurality of execution plans.

The executor 1200 may include an execution module 1210.

The execution module 1210 is configured to execute the target execution plan.

Optionally, the executor 1200 may further include a collection module 1220. The collection module 1220 is configured to collect parameter values of running parameters of a part or all operators in the target execution plan.

Optionally, the collection module 1220 is configured to collect a parameter value of a running parameter of an operator whose difference between a true value of an execution cost in the target execution plan and an estimated value of the execution cost is greater than or equal to a first threshold.

The estimated value of the execution cost of the operator is a result of processing the eigenvalue of the target feature of the operator by the first cost model. The true value of the execution cost of the operator is a real execution cost of the operator.

For example, the running parameter of the operator may include execution context information of the operator. Optionally, the collection module 1220 may include a context information collection module 1221.

The context information collection module 1221 is configured to collect the execution context information of the operator. For example, the execution context information of the operator may include any one or more of the following: a startup time (startup time) of the operator, a total execution time (total time) of the operator, an actual number of rows (actual rows) read by the operator, a degree of parallelism (degree of parallelism, DOP) of the operator, an operator (operation) type, maximum memory usage, a data storage manner, an operator result width, a number of execution times of the operator in a query, a number of select (select) times at an execution moment of the operator, a number of update (update) times at an execution moment of the operator, or a number of insert (insert) times at an execution moment of the operator.

For example, the running parameter of the operator may include a system parameter corresponding to the operator, that is, a system running indicator of the operator in an execution process. Optionally, the collection module 1220 may include a system parameter collection module 1222.

The system parameter collection module 1222 may be configured to collect a parameter value of the system parameter of the operator in the execution process. For example, the system parameter may include any one or more of the following: IO usage, system CPU usage, memory usage, or the like.

IO usage may also be referred to as IO bandwidth. Alternatively, the IO usage may include an IO read amount and an IO write amount.

As shown in FIG. 1, data collected by the collection module 1220 may be stored in a first memory 1300. Further, the data stored in the first memory 1300 may be periodically flushed into a second memory 1400. The first memory 1300 may be an internal memory, for example, a host memory. The second memory 1400 may be an external memory, for example, a host disk.

Optionally, the executor 1200 may include a management module.

The management module may be configured to manage the cost model.

Optionally, the management module may include a first management module. The first management module may be configured to perform incremental training or full training on the first cost model, to obtain a second cost model, and replace the first cost model with the second cost model.

For example, as shown in FIG. 1, the first management module may include a management module 1231. The management module 1231 may be configured to perform incremental training on the first cost model, to obtain a second cost model, and replace the first cost model with the second cost model.

Incremental training is to fine-tune and calibrate the model based on new data.

For example, as shown in FIG. 1, the first management module may include a management module 1232.

The management module 1232 may be configured to perform full training on the first cost model to obtain a second cost model, and replace the first cost model with the second cost model.

The management module 1231 and the management module 1232 train the first cost model, to adjust a parameter of the first cost model. The management module 1231 and the management module 1232 may also be collectively referred to as a model parameter update module.

Optionally, the management module may include a second management module.

For example, the second management module may be a management module 1233 in FIG. 1.

The management module 1233 may be configured to perform hyperparameter optimization on the first cost model to obtain a third cost model, and replace the first cost model with the third cost model.

The management module 1233 is configured to perform hyperparameter optimization on the cost model, and may also be understood as being configured to construct the cost model. The management module 1233 may also be referred to as a cost model construction module.

A hyperparameter is a concept relative to the parameter of the model. The hyperparameter is a value that does not change during model training. For example, the hyperparameter may include a structure parameter of the model, a learning rate in a training process, and the like.

Optionally, the management module may include a third management module.

For example, the third management module may be a management module 1234 in FIG. 1. The management module 1234 may be configured to perform operator target feature selection on a feature set of the operator, that is, perform feature selection on the feature set of the operator, and replace the current target feature with a selected feature.

The management module 1234 may also be referred to as a feature selection module.

For specific descriptions of the foregoing modules, refer to related descriptions of the following method embodiments.

It should be understood that the modules in the system shown in FIG. 1 and a location relationship between the modules are merely examples, and do not constitute a limitation on the solutions of this application. For example, in the system shown in FIG. 1, the management module is located in the executor 1200. In another possible implementation, the management module may alternatively be located at another location in a database kernel. This is not limited in embodiments of this application. For another example, the management module 1231 and the management module 1232 are different modules. In another possible implementation, the management module 1231 and the management module 1232 may be a same module. In addition, during actual application, the database system may include more or fewer modules. This is not limited in embodiments of this application. For example, the executor 1200 may further include a plan generator, configured to generate an execution plan.

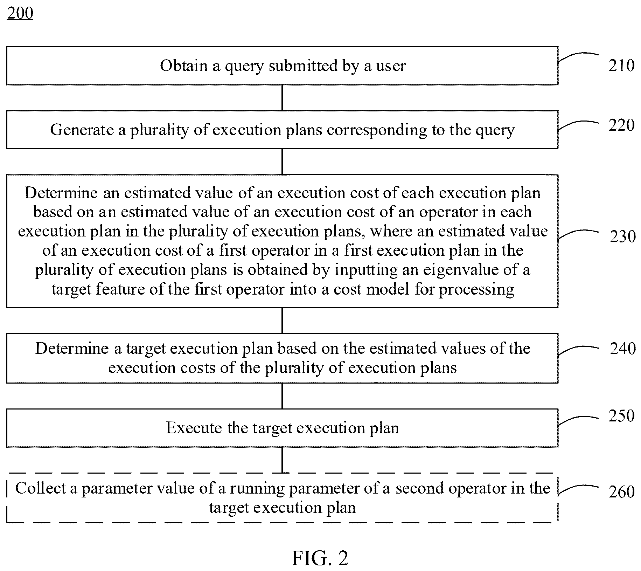

FIG. 2 is a schematic flowchart of a method for selecting an execution plan according to an embodiment of this application. A method 200 shown in FIG. 2 may be executed by a database system. For example, the method 200 may be implemented by database kernel software.

For example, the method in this embodiment of this application is performed by the system shown in FIG. 1.

As shown in FIG. 2, the method 200 includes the following steps.

210: Obtain a query submitted by a user.

The query submitted by the user may be represented by a query statement. For example, the query may be an SQL query.

220: Generate a plurality of execution plans corresponding to the query.

For example, step 220 may be performed by a parser in the database system. The corresponding execution plans are generated after the query passes through the parser. The execution plan may also be referred to as an execution path.

The plurality of execution plans may be used to execute the query, to obtain a query result requested by the query. The plurality of execution plans may also be referred to as a plurality of candidate execution plans.

One query statement may be executed in different manners by using the plurality of execution plans, for example, executed in different manners such as using different indexes, joins, or sequences. In other words, the query result requested by the query may be obtained in a plurality of manners.

A specific step in the execution plan can be implemented by using a database operator. The database operator may also be referred to as an execution operator or an operator.

For example, the execution plan may include any one or more types of the following operators: a control operator, a scan operator, a materialization operator, a join operator, or the like.

230: Determine an estimated value of an execution cost of each execution plan based on an estimated value of an execution cost of an operator in each execution plan in the plurality of execution plans. An estimated value of an execution cost of a first operator in a first execution plan in the plurality of execution plans is obtained by inputting an eigenvalue of a target feature of the first operator into a cost model for processing.

For example, step 230 may be performed by an optimizer in the database system. The optimizer may be a node responsible for query optimization in the database. The optimizer may perform cost estimation on each execution plan, to obtain the estimated value of the execution cost of each execution plan. For example, the optimizer may be the optimizer 1100 in FIG. 1. Specifically, step 230 may be performed by the cost estimation module 1110 in FIG. 1.

In this embodiment of this application, the execution cost may be referred to as a cost for short.

For example, the execution cost may include any one or more of a CPU cost, an IO cost, or the like.

For example, the execution cost may be an execution time.

The execution plan may include one or more operators. The estimated value of the cost of the execution plan is determined based on an estimated value of a cost of each operator in the execution plan.

For example, the estimated value of the cost of the execution plan may be a sum of the estimated values of the costs of all the operators in the execution plan. For another example, the estimated value of the cost of the execution plan may be a weighted sum of the estimated values of the costs of all the operators in the execution plan. It should be understood that this is merely an example, and a relationship between the estimated value of the cost of the execution plan and the estimated value of the cost of each operator is not limited in embodiments of this application.

The first execution plan may be any execution plan in the plurality of execution plans.

For example, the estimated values of the execution costs of the plurality of execution plans may be determined in a manner the same as that of the first execution plan. For ease of description, the first execution plan is merely used as an example for description in this embodiment of this application.

The first operator may be any operator in the first execution plan. The estimated value of the cost of the first operator may be determined by using the following steps.

231: Determine the eigenvalue of the target feature of the first operator.

For example, step 231 may be performed by the eigenvalue determining module 1111 in FIG. 1.

232: Input the eigenvalue of the target feature of the first operator into the first cost model for processing, to obtain the estimated value of the cost of the first operator.

For example, step 232 may be performed by the operator cost estimation module 1112 in FIG. 1.

The optimizer may determine the estimated value of the cost of the first execution plan based on an estimated value of a cost of each operator in the first execution plan.

For example, the estimated value of the execution cost of each operator in the first execution plan may be determined in a manner the same as that of the first operator. In other words, an eigenvalue of a target feature of each operator in the first execution plan is determined, and the eigenvalue of the target feature of each operator is input into the first cost model for processing, to obtain the estimated value of the cost of each operator, so as to determine the estimated value of the cost of the first execution plan based on the estimated value of the cost of each operator.

It should be understood that the foregoing is merely an example. In step 230, an estimated value of an execution cost of an operator other than the first operator in the first execution plan may also be determined in a manner different from a manner of determining the estimated value of the execution cost of the first operator. This is not limited in embodiments of this application.

For ease of understanding and description, the first operator is merely used as an example for description in this embodiment of this application.

The first cost model is used to estimate the execution cost of the operator. In other words, the first cost model is used to output the estimated value of the execution cost of the operator. The eigenvalue of the target feature of the first operator is input into the cost model for processing, to obtain the estimated value of the execution cost of the first operator.

The first operator may have one or more target features. A number of target features is not limited in embodiments of this embodiment.

240: Determine a target execution plan based on the estimated values of the execution costs of the plurality of execution plans.

For example, step 240 may be performed by the optimizer in the database system. For example, the optimizer may be the optimizer 1100 in FIG. 1. Specifically, step 240 may be performed by the selection module 1120 in FIG. 1. The selection module 1120 may select the target execution plan from the plurality of execution plans based on the estimated values of the execution costs of the plurality of execution plans.

For example, an estimated value of an execution cost of the target execution plan is a smallest value in the estimated values of the execution costs of the plurality of execution plans.

In other words, an execution plan with a smallest estimated value of the execution cost is selected from the plurality of execution plans as the target execution plan.

The following describes step 230.

Optionally, the first cost model may be obtained through training based on a first training dataset. The first cost model is deployed on the database.

For example, the first cost model may be a lightweight machine learning algorithm model in the database.

For example, the first cost model may be a polynomial regression model, a linear regression model with a non-linear kernel, a logistic (logistic) regression model with a non-linear kernel, or the like.

It should be understood that the foregoing is merely an example, and the first cost model may alternatively be a model of another structure. For example, the first cost model may be constructed based on a trainable model and a model with a fixed parameter. For example, output of the first cost model may be a sum of output of the trainable model and output of the model with the fixed parameter, and the trainable model may be referred to as a residual model. The model with the fixed parameter is a model whose parameter does not change in a training process. In this way, in a training phase, the trainable model may be trained based on training data.

In this embodiment of this application, the cost model may be deployed on the database. In this way, an external model does not need to be invoked, to avoid a security problem that may exist in external invoking and improve system reliability. In addition, the cost model needs to be invoked for a plurality of times in a query optimization process, and the cost model deployed on the database can reduce an invoking cost and improve invoking efficiency, thereby ensuring overall performance of the database system. In addition, the cost model is obtained through training based on training data, and can be applied to different operators. This helps accurately fit a relationship between the eigenvalue of the target feature of the operator and the execution cost of the operator, thereby accurately estimating the execution cost of the operator. This helps predict the execution cost of the execution plan, and further helps determine a more proper target execution plan, thereby improving query performance of the database.

Optionally, the first training dataset includes first training data. The first training data includes an eigenvalue of a target feature of a first sample operator and a true value of an execution cost of the first sample operator.

The first training dataset may include one piece of first training data, or may include a plurality of pieces of first training data.

It should be noted that "first" in "first training data" is merely used to specify that the training data belongs to the first training dataset, and has no other limitation function. In other words, all training data in the first training dataset may be referred to as the first training data. "First" in "first sample operator" is merely used to specify that the sample operator belongs to the first training dataset, and has no other limitation function. In other words, all sample operators in the first training dataset are referred to as first sample operators.

The true value of the execution cost of the operator is an execution cost of the operator in an actual execution process.

The true value of the execution cost of the first sample operator is a true value of an execution cost corresponding to the eigenvalue of the target feature of the first sample operator. The eigenvalue of the target feature of the first sample operator and the true value of the execution cost of the first sample operator may be determined based on a running parameter of the first sample operator in an execution process.

For example, the eigenvalue of the target feature of the first sample operator is input into a to-be-trained model for processing, to obtain an estimated value of the execution cost of the first sample operator. To reduce a difference between the estimated value of the execution cost of the first sample operator and the true value of the execution cost of the first sample operator, the to-be-trained model is trained, that is, a parameter of the to-be-trained model is adjusted, to obtain a trained model, that is, the first cost model.

According to the solution in this embodiment of this application, the first cost model may be obtained through training based on the eigenvalue of the target feature of the first sample operator and the true value of the execution cost of the first sample operator. The cost model can better fit a relationship between the target feature of the operator and the execution cost of the operator. This helps more accurately estimate the execution cost of the operator, helps obtain a more accurate execution cost of the execution plan, and further helps determine a more proper target execution plan, thereby improving query performance.

In this embodiment of this application, the target feature may be determined as required.

For example, the target feature of the operator may be manually set.

Alternatively, the target feature of the operator may be determined through feature selection.

In this embodiment of this application, target feature selection may be understood as type selection of the target feature.

Specifically, feature selection is performed on a feature set of the operator, to obtain the target feature of the operator.

The feature set may include a feature related to the operator. For example, a feature set F of the operator may be represented as $F=\{f_1, f_2, ..., f_n\}$, where $f_1$, $f_2$, and $f_n$ represent different features related to the operator, for example, an operator type, a degree of parallelism of the operator, an operator result width, a number of execution times of the operator in a query, a number of select times at an execution moment of the operator, a number of update times at an execution moment of the operator, a number of insert times at an execution moment of the operator, CPU usage, IO bandwidth, or a cardinality of the operator. n is a positive integer.

For example, feature selection may be performed by the management module 1234 in FIG. 1.

An objective of feature selection may be to enable the first cost model to estimate an accurate execution cost based on as few features as possible. In other words, an objective of feature selection is to find a subset of a feature set. When elements in the subset are as few as possible, the first cost model may estimate an accurate execution cost based on the elements in the subset.

Feature selection may be implemented in a plurality of manners.

For example, combinations of different features in the feature set of the operator are enumerated, and a proper feature combination is selected from the combinations. A feature in the combination is the target feature of the operator.

The enumeration manner leads to a large search space, and consequently efficiency of feature selection is low.

For example, feature selection may be implemented through principal component analysis (principal component analysis, PCA).

This manner helps determine a key feature from the feature set of the operator.

For example, feature selection may be implemented based on a decision tree.

Optionally, the target feature of the operator may be determined through feature selection performed on the feature set based on the decision tree.

For a specific implementation of feature selection, refer to related descriptions in the following. Details are not described herein.

In this embodiment of this application, feature selection may be performed based on the decision tree, and one or more features with a highest correlation with the execution cost of the operator are selected from the feature set of the operator as the target feature, or one or more features that have greatest impact on the execution cost of the operator are selected from the feature set of the operator as the target feature. In this way, a number of features that are used as input of the cost model can be reduced, and difficulty of a learning task of the cost model is reduced, that is, complexity of the cost model is reduced. In addition, in this embodiment of this application, a feature with a low correlation is removed, so that a risk of overfitting can be reduced as much as possible, thereby helping improve accuracy of predicting the cost model.

For example, the target feature of the operator may include operator information and/or a system parameter corresponding to the operator.

For example, the target feature of the operator may include the operator information.

For example, the operator information may include at least one of the following: a cardinality of the operator, an operator type, a degree of parallelism of the operator, or the like.

The number of execution times of the operator in the query is a loopcount (loopcount).

The eigenvalue of the target feature may be converted into a format that can be processed by the first cost model. For example, the eigenvalue of the target feature may be converted into a numerical vector.

For example, the operator type may be represented as one-hot encoding. For example, an operator type of an index scan operator may be represented as 0001, and an operator type of a sequence scan operator may be represented as 0010.

Optionally, the target feature of the first operator may include at least one of the following: a cardinality of the first operator, an operator type of the first operator, a degree of parallelism of the first operator, a loopcount of the first operator, a number of select times at an execution moment of the first operator, a number of update times at an execution moment of the first operator, a number of insert times at an execution moment of the first operator, or the like.

For example, the target feature of the operator may further include the system parameter corresponding to the operator.

The system parameter may include at least one of the following: CPU usage, IO bandwidth, memory usage, or the like. The IO bandwidth may also be referred to as IO usage. Alternatively, the IO bandwidth may include an IO read amount and an IO write amount.

The system parameter corresponding to the operator may be understood as a system parameter of the operator in an execution phase.

For example, the target feature of the first operator may include a system parameter corresponding to the first operator.

Optionally, the target feature of the first operator may include at least one of the following: CPU usage corresponding to the first operator, IO bandwidth corresponding to the first operator, or memory usage corresponding to the first operator.

The CPU usage corresponding to the first operator may be CPU usage of the first operator in the execution phase. The IO bandwidth corresponding to the first operator may be IO bandwidth of the first operator in the execution phase. The memory usage corresponding to the first operator may be memory usage of the first operator in the execution phase.

Correspondingly, the eigenvalue of the target feature of the operator may include a parameter value of the system parameter of the operator in the execution phase.

In this embodiment of this application, the target feature of the first operator may include the system parameter corresponding to the first operator, and the system parameter corresponding to the first operator is used as input of the cost model. In this way, impact of a system environment can be considered when the cost of the first operator is estimated, thereby improving accuracy of predicting the cost model.

In the training phase, the sample operator in the training data may be an operator that has been executed. The first training data is used as an example. The eigenvalue of the target feature of the first sample operator may be determined based on the collected running parameter of the first sample operator. For example, the target feature of the operator may include the cardinality of the operator. A value of the cardinality of the first sample operator may be directly obtained from collected context information of the sample operator. For another example, the target feature of the operator may include the system parameter of the operator in the execution phase. The parameter value of the system parameter of the first sample operator in the execution phase may be a parameter value that is of the system parameter of the first sample operator in the execution phase and that is obtained in a time matching manner.

In the query optimization phase, that is, an inference phase of the first cost model, an operator (for example, the first operator) has not been executed, and a part or all of eigenvalues that are of target features of the operator and that are input into the first cost model may not be directly obtained. For example, the target feature of the operator may include the cardinality of the operator. When the cost of the first operator is estimated, the first operator has not been executed, and a value of the cardinality of the first operator cannot be collected. For another example, the target feature of the operator may include the system parameter of the operator in the execution phase. When the cost of the first operator is estimated, the first operator has not been executed, and a parameter value of the system parameter of the first operator in the execution phase cannot be collected.

The eigenvalue of the target feature of the first operator may be determined in a manner of calculation, prediction, or the like. In other words, a value that cannot be directly obtained, for example, the value of the cardinality of the first operator or the parameter value of the system parameter corresponding to the first operator, may be determined in a manner of calculation, prediction, or the like.

For example, step 231 may include: calculating the eigenvalue of the target feature of the first operator based on a calculation function of the target feature.

The calculation function of the target feature indicates a manner of determining the eigenvalue of the target feature. Calculation functions of different target features may be different.

For example, input of the calculation function may be information that can be obtained from the running parameter, and the eigenvalue of the target feature may be obtained after processing of the calculation function.

The calculation function of the target feature may be stored in a feature table. A feature in the feature table may be used as the target feature.

For example, the calculation function of the target feature may be a system function, that is, a fixed function in the system. When the database system is started, content in the feature table can be loaded from a system table to a memory. When the execution cost of the first operator is estimated, the feature table may be obtained from the memory, and the eigenvalue of the target feature of the first operator is calculated based on the calculation function of the target feature in the feature table.

The content in the feature table can be updated. For example, when the target feature changes or the calculation function of the target feature changes, the content in the feature table is updated accordingly. For example, the management module 1234 in FIG. 1 may be configured to perform feature selection, and update the content in the feature table based on a selected feature.

The following describes the calculation function of the target feature by using an example.

For example, the target feature of the first operator may include the system parameter corresponding to the first operator. When cost estimation is performed on the first operator, the first operator has not been executed, and the system parameter corresponding to the first operator, that is, a system parameter used when the first operator is executed in the future, cannot be directly obtained.

Optionally, the parameter value of the system parameter corresponding to the first operator may be obtained according to a sequence prediction algorithm.

In other words, the parameter value of the system parameter corresponding to the first operator is an estimated value of the system parameter of the first operator in the execution phase.

Optionally, step 231 may include: obtaining a first time sequence, where elements in the first time sequence include a plurality of parameter values of a first system parameter in a first time period; and predicting, according to the sequence prediction algorithm based on the first time sequence, a parameter value of the first system parameter corresponding to the first operator. The first time period is earlier than the execution phase of the first operator.

For example, the first system parameter may be any one of IO bandwidth, system CPU usage, or memory usage.

Parameter values of system parameters collected at different moments may be considered as time sequence data, and have a time sequence feature. The database system may collect parameter values of system parameters at different moments, and a plurality of collected parameter values may form a time sequence. An element in the time sequence is a parameter value of the system parameter at a different moment. The parameter value of the system parameter of the first operator in the execution phase, that is, the parameter value of the system parameter corresponding to the first operator, may be obtained through prediction in a sequence prediction manner.

For example, the sequence prediction algorithm may include an autoregressive (autoregressive) algorithm, a long short-term memory (long short-term memory) algorithm, an autoregressive integrated moving average model (autoregressive integrated moving average model, ARIMA), or the like.

For different system parameters, parameter values of the different system parameters may be predicted according to a same sequence prediction algorithm, or parameter values of the different system parameters may be predicted according to different sequence prediction algorithms. This is not limited in embodiments of this application.

The sequence prediction algorithm may be used as the calculation function in the foregoing feature table.

For example, the target feature of the first operator may include the cardinality of the first operator. When cost estimation is performed on the first operator, the first operator has not been executed, and the cardinality of the first operator cannot be directly obtained.

Optionally, the value of the cardinality of the first operator may be obtained through prediction by using a cardinality model, and the cardinality model is a mixture model.

An object involved in an operator query and an operator query condition are input into the cardinality model, to predict a selection rate, and the selection rate is multiplied by a total number of rows of to-be-queried data, to obtain a number of rows of output data of a lower-layer node. The total number of rows of to-be-queried data may be determined based on a statistical result.

For example, a column involved in the operator query, a data table in which the column is located, and an expression of the operator query condition are input into the cardinality model, to predict the selection rate.

The cardinality model is obtained through training based on a training dataset of the cardinality model.

The cardinality of the operator is related to a query predicate of the lower-layer node. The mixture model is used to describe a data distribution of a plurality of columns of data in a data table, and fitting is performed by using the existing operator query condition and the actual selection rate, to train the mixture model. A trained mixture model may be used as the cardinality model.

The data distribution of the plurality of columns of data in the data table is a probability density distribution of the plurality of columns of data.

For example, the cardinality model may be a mixture uniform distribution model, a mixture Gaussian distribution model, or the like.

The following uses an example in which the cardinality model is the mixture uniform distribution model for description.

The training dataset of the cardinality model includes one or more pieces of training data. The training data includes a training sample and a label of the training sample. The training sample may include a sample operator query condition, and the label of the training sample may be an actual selection rate corresponding to the sample operator query condition.

A plurality of regions are determined based on the sample operator query condition in the training dataset. The plurality of regions are regions corresponding to a plurality of uniform distributions in the mixture uniform distribution model.

The following describes an example of a manner of determining the plurality of regions.

Sampling is performed in a query range determined based on the sample operator query condition in the training dataset, to obtain the plurality of samples. For example, there are 10 query ranges determined based on the sample operator condition of the training dataset, and 10 points are randomly sampled in each query range, to obtain 100 sampling points.

One region is determined by using each sampling point as a center, for example, a square region, a cube region, or a supercube region. If the sample operator query condition includes two query features, and the query range is a two-dimensional space, one square region is determined by using each sampling point as a center. For example, if the sample operator query condition is a<1 and b>2, a and b are two query features. If the sample operator query condition includes three query features, and the query range is a three-dimensional space, one cube region is determined by using each sampling point as a center. For example, the sample operator query condition is a<1, b>2, and c>3, and a, b, and c are three query features. By analogy, if the sample operator query condition includes more than three query features, one supercube region is determined by using each sampling point as a center.

A boundary of each region may be determined based on a distance between each sampling point and a point closest to the sampling point.

It should be understood that the foregoing is merely an example, and the plurality of regions may be alternatively determined in another manner. This is not limited in embodiments of this application.

It is assumed that the mixture uniform distribution model includes four independent uniform distributions $S_1$, $S_2$, $S_3$, and $S_4$, that is, four regions are determined based on the sample operator query condition in the training dataset. Distribution areas corresponding to the four independent uniform distributions, that is, areas of the four regions are $|S_1|$, $|S_2|$, $|S_3|$, and $|S_4|$.

Input of the mixture uniform distribution model includes an operator query condition, and output of the mixture uniform model includes a predicted selection rate corresponding to the operator query condition. The predicted selection rate corresponding to the operator query condition is a cumulative probability distribution of a query range determined based on the operator query condition.

For example, a cumulative probability distribution of a query range Q may meet the following formula:

$$\sum_{x \in Q} P(x) = \frac{w_1 \cdot |S_1 \cap Q|}{|S_1|} + \frac{w_2 \cdot |S_2 \cap Q|}{|S_2|} + \frac{w_3 \cdot |S_3 \cap Q|}{|S_3|} + \frac{w_4 \cdot |S_4 \cap Q|}{|S_4|}$$

$\sum_{x \in Q} P(x)$ represents the cumulative probability distribution of the query range Q, and x represents a point in the region Q. $w_1$, $w_2$, $w_3$, and $w_4$ are respectively weights corresponding to the uniform distributions, that is, weights corresponding to the regions. In a training process, the query range Q is a query range determined based on the sample operator query condition. In an inference process, the query range Q is determined based on a query condition of a to-be-processed operator.

In the training process of the cardinality model, the sample operator query condition may be used as input of the mixture uniform distribution model, and the mixture uniform distribution model outputs the predicted selection rate. To reduce an error between the predicted selection rate and an actual selection rate corresponding to the sample operator query condition, a parameter of the mixture uniform distribution model, that is, a weight corresponding to each region, is adjusted, until training is completed. The trained model is the cardinality model.

It should be understood that the foregoing uses only the four regions as an example for description, and does not constitute a limitation on the mixture uniform model in embodiments of this application. In another scenario, the mixture uniform model may also include more or fewer regions.

It should be further understood that the foregoing manner of constructing the mixture uniform model is merely an example, and the mixture uniform model may be alternatively constructed in another manner. This is not limited in embodiments of this application.

The cardinality model may be used as a calculation function in the foregoing feature table.

The model is a lightweight model, and is simple to be solved, and can implement fast solving. This helps quickly predict a value of the cardinality, and further helps improve efficiency of cost estimation.

250: Execute the target execution plan.

For example, step 250 may be performed by an executor in the database system. For example, step 250 may be performed by the executor 1200 in FIG. 1. Specifically, the execution module 1210 may execute the target execution plan.

Optionally, the method 200 further includes step 260.

260: Collect a parameter value of a running parameter of a second operator in the target execution plan.

For example, the parameter value of the running parameter of the second operator is used to train or optimize the first cost model.

For example, step 260 may be performed by the executor in the database system. For example, step 260 may be performed by the executor 1200 in FIG. 1. Specifically, step 260 may be performed by the collection module 1220 in the executor 1200.

In this embodiment of this application, the parameter value of the running parameter of the second operator in the target execution plan may be collected, to subsequently adjust the first cost model and the like.

For example, the second operator may be any operator in the target execution plan. For example, in step 260, parameter values of running parameters of all operators in the target execution plan may be collected.

Optionally, a difference between an estimated value of an execution cost of the second operator and a true value of the execution cost of the second operator is greater than or equal to a first threshold. The estimated value of the execution cost of the second operator is obtained by inputting an eigenvalue of a target feature of the second operator into the first cost model for processing.

In this case, an operator whose difference between an estimated value of an execution cost in the target execution plan and a true value of the execution cost is greater than or equal to the first threshold may be referred to as the second operator.

In other words, in step 260, a parameter value of a running parameter of an operator whose estimated cost differs greatly from the real cost may be collected.

For the estimated value of the execution cost of the second operator, refer to the foregoing manner of determining the estimated value of the execution cost of the first operator. Only the "first operator" needs to be replaced with the "second operator". To avoid repetition, details are not described herein again.

For example, the first threshold may be a fixed value.

Alternatively, the first threshold may be a value related to the execution cost of the second operator. For example, the first threshold may be the true value of the execution cost of the second operator. In this case, if a difference between an estimated value of an execution cost of an operator and a true value of the execution cost of the operator is greater than or equal to the true value of the execution cost of the operator, that is, if an error between the estimated value of the execution cost of the operator and the true value of the execution cost of the operator exceeds one time, the operator may be the second operator.

In this embodiment of this application, the parameter value of the running parameter of the operator whose estimated cost differs greatly from the real cost may be collected. In this way, performance of the cost model can be monitored. For example, performance of the cost model may be monitored based on a number of collected second operators. For example, if a large number of second operators are collected within a specific time, the cost model may not be suitable for a current running environment, or a data distribution of training data of the cost model is inconsistent with a data distribution of current input data of the cost model, and performance of the cost model deteriorates. Alternatively, performance of the cost model may be monitored based on the difference between the estimated value of the execution cost of the second operator and the true value of the execution cost of the second operator. For example, if the difference between the estimated value of the execution cost of the second operator and the true value of the execution cost of the second operator is large, the cost model may not be suitable for a current running environment, that is, performance of the cost model deteriorates.

Optionally, the running parameter of the second operator may include execution context information of the second operator.

For example, the execution context information of the operator may include any one or more of the following: a startup time (startup time) of the operator, a total execution time (total time) of the operator, an actual number of rows (actual rows) read by the operator, a degree of parallelism (degree of parallelism, DOP) of the operator, an operator (operation) type, maximum memory usage, a data storage manner, an operator result width, a number of execution times of the operator in a query, a number of select (select) times at an execution moment of the operator, a number of update (update) times at an execution moment of the operator, or a number of insert (insert) times at an execution moment of the operator.

For example, the execution context information of the operator may be collected by the context information collection module 1221 in FIG. 1.

Optionally, the running parameter of the second operator may include a system parameter corresponding to the second operator, that is, a system parameter of the second operator in an execution phase.

For example, the system parameter corresponding to the second operator may include at least one of the following: system CPU usage corresponding to the second operator, IO bandwidth corresponding to the second operator, memory usage corresponding to the second operator, or the like.

For example, the parameter value of the system parameter corresponding to the operator may be collected by the system parameter collection module 1222 in FIG. 1.

Optionally, the method 200 further includes: storing the collected parameter value of the running parameter of the second operator in an internal memory.

For example, the internal memory may be the first memory 1300 in FIG. 1.

For example, the parameter value of the running parameter of the second operator may be stored in a hash table in the internal memory.

In the hash table, different second operators correspond to different hash values. The hash value corresponding to the operator may be obtained through calculation by using a feature that identifies the operator. For example, the hash value corresponding to the operator may be obtained through calculation based on an operator type, an operator predicate condition, and the like. If the operator is a binary operator (for example, a table join), a hash value corresponding to the operator may be further determined based on table IDs of left and right word tables.

If a same second operator is collected for a plurality of times, the parameter value that is of the running parameter of the second operator and that is stored in the hash table may be an average value of parameter values of running parameters of the second operator that is collected for the plurality of times. For example, the second operator that is collected for a plurality of times is an operator #1. A running parameter of the operator #1 includes CPU usage of the operator #1 in an execution phase, a startup time of the operator #1, and a total execution time of the operator #1. The parameter value that is of the running parameter of the operator #1 and that is stored in the hash table may include an average value of CPU usage collected for a plurality of times, an average value of startup times of the operator #1 collected for a plurality of times, and an average value of total execution times of the operator #1 collected for a plurality of times.

In this embodiment of this application, the running parameter of the second operator may be collected by using the hash table, and different second operators correspond to different hash values. In this way, it can be ensured that a same operator is not stored for a plurality of times, that is, a deduplication operation can be implemented.

Further, the method 200 further includes: flushing the parameter value that is of the running parameter of the second operator and that is stored in the internal memory into an external memory.

In other words, the parameter value that is of the running parameter of the second operator and that is stored in the internal memory is moved to the external memory.

For example, the external memory may be the second memory 1400 in FIG. 1.

For example, the parameter value that is of the running parameter of the second operator and that is stored in the internal memory is periodically flushed into the external memory.

In other words, the parameter value that is of the running parameter of the second operator and that is stored in the internal memory is periodically flushed into the external memory.

For example, the period may be 10 minutes, that is, the parameter value that is of the running parameter of the second operator and that is stored in the internal memory is flushed into the external memory every 10 minutes.

For example, when a number of second operators in the internal memory is greater than or equal to a specified threshold, the parameter value that is of the running parameter of the second operator and that is stored in the internal memory is flushed into the external memory.

For example, the specified threshold may be 10000 operators, that is, when the number of second operators stored in the internal memory is greater than or equal to 10000, the parameter value that is of the running parameter of the second operator and that is stored in the internal memory is flushed into the external memory.

It should be understood that the foregoing is merely an example, and an occasion of flushing the data in the internal memory into the external memory may be alternatively determined in another manner. For example, when a timer expires, the data in the internal memory is flushed into the external memory. For another example, when an amount of data stored in the internal memory exceeds a specified threshold, the data in the internal memory is flushed into the external memory. This is not limited in embodiments of this application.

Further, when the running parameter that is of the second operator and that is stored in the internal memory is flushed into the external memory, the internal memory may retain some data, for example, data recently stored in the internal memory. An amount of data retained in the internal memory may be set as required. For example, 1/5 of the amount of data flushed into the external memory is retained.

In a process of collecting the execution context information of the operator, parallel collection may occur. In a high-concurrency read/write scenario, parallel collection may have problems of lock contention and lock waiting.

Optionally, step 260 includes: attempting to obtain a lock before collecting the parameter value of the running parameter of the second operator, and when the lock is obtained, collecting the parameter value of the running parameter of the second operator.

Further, when the lock is not obtained, the collection step is skipped.

For example, the lock may be a lightweight concurrent lock.

The system may create a thread to execute the target execution plan. When the parameter value of the running parameter of the second operator needs to be collected, the thread attempts to hold the lock, that is, obtains the lock. If the lock is successfully held, that is, the lock is obtained, the parameter value of the running parameter of the second operator is collected. If the lock fails to be held, that is, the lock is not obtained, the collection step is skipped.

Obtaining the lock may also be referred to as obtaining a lock of an object, locking an object, or the like.

In this way, only a thread that holds a lock is performing a collection step at a same moment. For example, only one thread can hold a lock at a same moment, that is, only one thread is performing a collection step at a same moment, and collection of different threads does not conflict. This avoids problems such as lock contention and lock waiting that may exist in a high-concurrency read/write scenario, and does not block normal execution of another thread, and can ensure query performance.

In a possible implementation, the collected running parameter of the second operator may be used as training data to update the first cost model.

Optionally, the method 200 further includes: performing incremental training or full training on the first cost model based on a second training dataset, to obtain a second cost model; and replacing the first cost model with the second cost model.

The second training dataset may include second training data. The second training data includes an eigenvalue of a target feature of a second sample operator and a true value of the execution cost of the second sample operator.

Optionally, the training data in the second training dataset is determined based on the parameter value of the running parameter of the second operator. The second sample operator may be the second operator. In this case, the eigenvalue of the target feature of the second sample operator and the true value of the execution cost of the second sample operator may be determined based on the parameter value of the running parameter of the second operator.

It should be noted that the training data in the second training dataset is determined based on the parameter value of the running parameter of the second operator. It may be understood that all training data in the second training dataset is determined based on the parameter value of the running parameter of the second operator, or some training data in the second training dataset is determined based on the parameter value of the running parameter of the second operator.

"Second" in the second training data is merely used to specify that the training data belongs to the second training dataset, and has no other limitation function. In other words, all data in the second training dataset is the second training data. "Second" in "second sample operator" is merely used to specify that the sample operator belongs to the second training dataset, and has no other limitation function. In other words, all sample operators in the second training dataset are second sample operators.

The following describes how to perform incremental training on the first cost model based on the second training dataset. For ease of description, in this case, the second training dataset may be referred to as a training dataset 21#. In other words, incremental training is performed on the first cost model based on the training dataset 21#.

For example, this step may be performed by the management module in the system in FIG. 1. Specifically, this step may be performed by the management module 1231.

According to the solution in this embodiment of this application, the running parameter of the second operator may be collected in an execution process of the target execution plan. For example, the second operator may be an operator with a large cost estimation error, and incremental training is performed on the cost model based on the collected running parameter of the second operator. In this way, a parameter of the cost model can be quickly adjusted, so that the cost model can better adapt to a current running environment, for example, better adapt to a data distribution, a load distribution, or a system hardware environment in a current database system, to improve adaptability of the cost model, thereby ensuring accuracy of predicting the cost model.

Optionally, the training data in the training dataset 21# is determined based on the parameter value that is of the running parameter of the second operator and that is stored in the internal memory.

The training dataset 21# may be considered as a first training dataset of an updated first cost model.

A trigger condition of incremental training can be set as required.

For example, the trigger condition of incremental training may be that the first cost model is invalid.

Optionally, when the first cost model is invalid, incremental training is performed on the first cost model based on the training dataset 21#.

The following describes an example of a criterion for determining that the first cost model is invalid.

For example, if a difference between a true value of an execution cost of a second operator in the internal memory and an estimated value of the execution cost of the second operator is greater than a specified threshold, it may be determined that the first cost model is invalid.

For example, if a difference between a true value of an execution cost of a second operator in the internal memory and an estimated value of the execution cost of the second operator is greater than 10 times the true value of the execution cost of the second operator, that is, an error between the estimated value of the execution cost of the second operator and the true value of the execution cost of the second operator exceeds 10 times, it is determined that the first cost model is invalid, and incremental training is performed on the first cost model.

For example, if differences between true values that are of execution costs of a plurality of second operators and that are continuously stored in the internal memory and estimated values of the execution costs of the plurality of second operators are greater than a specified threshold, it may be determined that the first cost model is invalid.

For example, if differences between true values that are of execution costs of 10 second operators and that are continuously stored in the internal memory and estimated values of the execution costs of the 10 second operators are greater than five times the true values of the execution costs of the second operators, it is determined that the first cost model is invalid, and incremental training is performed on the first cost model.

It should be understood that the foregoing is merely an example. In an application scenario, the trigger condition of incremental training may be set as required. This is not limited in embodiments of this application. For example, if the number of second operators stored in the internal memory exceeds the specified threshold, incremental training may be performed on the first cost model. For another example, incremental training may be periodically performed on the first cost model.

In the solution in this embodiment of this application, corresponding program code is run in the internal memory, and incremental training is performed on the cost model based on the running parameter that is of the second operator and that is stored in the internal memory. In this way, an adjustment speed of the parameter of the cost model can be ensured.

The following describes how to perform full training on the first cost model based on the second training dataset. For ease of description, in this case, the second training dataset may be referred to as a training dataset 22#. In other words, full training is performed on the first cost model based on the training dataset 22#.

Full training is to initialize the first cost model, and train an initial model based on the training dataset 22#.

For example, this step may be performed by the management module in the system in FIG. 1. Specifically, this step may be performed by the management module 1232.

According to the solution in this embodiment of this application, the running parameter of the operator may be collected in an execution process of the target execution plan, and full training is performed on the cost model based on the collected running parameter of the operator, to update the cost model. In this way, the cost model can better adapt to a current running environment, for example, better adapt to a data distribution, a load distribution, or a system hardware environment in a current database system, to improve adaptability of the cost model, thereby ensuring accuracy of predicting the cost model.

Optionally, the training data in the training dataset 22# is determined based on the parameter value that is of the running parameter of the second operator and that is stored in the external memory.

The training dataset 22# may be considered as a first training dataset of an updated first cost model.

A trigger condition of full training can be set as required.

For example, the trigger condition of full training may be that the first cost model is invalid for a specified number of times in a second time period.

For example, the second time period may be 10 minutes, and the specified number of times may be 3. If the cost model is invalid for more than three times within 10 minutes, full training may be performed on the first cost model.

For example, the trigger condition of full training may be that a number of times of performing incremental training exceeds a specified number of times.

For example, the specified number of times may be 20. If the number of times of performing incremental training exceeds 20, full training may be performed on the first cost model.

It should be understood that the foregoing is merely an example. In an application scenario, the trigger condition of full training may be set as required. This is not limited in embodiments of this application.

Optionally, the method 200 further includes: performing hyperparameter optimization on the first cost model based on a third training dataset, to obtain a third cost model; and replacing the first cost model with the third cost model.

For example, this step may be performed by the management module in the system in FIG. 1. Specifically, this step may be performed by the management module 1233.

The third training dataset may include third training data. The third training data includes an eigenvalue of a target feature of a third sample operator and a true value of the execution cost of the third sample operator.

Optionally, the training data in the third training dataset is determined based on the parameter value of the running parameter of the second operator. The third sample operator may be the second operator. In this case, the eigenvalue of the target feature of the third sample operator and the true value of the execution cost of the third sample operator may be determined based on the parameter value of the running parameter of the second operator.

It should be noted that the training data in the third training dataset is determined based on the parameter value of the running parameter of the second operator. It may be understood that all training data in the third training dataset is determined based on the parameter value of the running parameter of the second operator, or some training data in the third training dataset is determined based on the parameter value of the running parameter of the second operator.

"Third" in the third training data is merely used to specify that the training data belongs to the third training dataset, and has no other limitation function. In other words, all data in the third training dataset is the third training data. "Third" in "third sample operator" is merely used to specify that the sample operator belongs to the third training dataset, and has no other limitation function. In other words, all sample operators in the third training dataset are third sample operators.

According to the solution in this embodiment of this application, the running parameter of the second operator may be collected in an execution process of the target execution plan, and hyperparameter optimization is performed on the cost model based on the collected running parameter of the second operator. In this way, the cost model can better adapt to a current running environment, for example, better adapt to a data distribution, a load distribution, or a system hardware environment in a current database system, to improve adaptability of the cost model, thereby ensuring accuracy of predicting the cost model.

Optionally, the training data in the third training dataset is determined based on the parameter value that is of the running parameter of the second operator and that is stored in the external memory.

The third training dataset may be considered as a first training dataset of an updated first cost model.

For example, hyperparameter optimization may be implemented by using an auto machine learning (auto machine learning, AutoML) mechanism in the database system.

Hyperparameter optimization may be implemented in a plurality of manners, for example, grid search, a Bayesian optimization algorithm, a genetic algorithm, and a hyperband (hyperband) algorithm.

The hyperband algorithm is used as an example. A plurality of hyperparameter combinations are enumerated according to the hyperband algorithm, and training is performed based on the plurality of hyperparameters. After each training ends, a hyperparameter combination whose error is less than an average error is retained until one group of hyperparameters is left. The model is trained based on the group of hyperparameters, to obtain a trained cost model, that is, the third cost model.

A trigger condition of hyperparameter optimization may be set as required.

For example, the trigger condition of hyperparameter optimization may be that an average value of differences between true values that are of execution costs of the plurality of second operators and that are collected in a third time period and estimated values of the execution costs of the plurality of second operators are greater than a specified threshold.

For example, the third time period may be 12 hours, and the specified threshold may be an average value of the true values of the execution costs of the plurality of second operators. If the average value of the differences between the true values that are of the execution costs of the plurality of second operators and that are collected within 12 hours and the estimated values of the execution costs of the plurality of second operators is greater than the average value of the true values of the execution costs of the plurality of second operators, that is, if an error between the true values that are of the execution costs of the plurality of second operators and that are collected within 12 hours and the estimated values of the execution costs of the plurality of second operators exceeds one time, hyperparameter optimization is performed.

It should be understood that the foregoing is merely an example. In an application scenario, the trigger condition of hyperparameter optimization may be set as required. This is not limited in embodiments of this application.

Optionally, the method 200 further includes: performing feature selection on a feature set based on a fourth training dataset; and replacing the target feature with a selected feature.

For example, this step may be performed by the management module in the system in FIG. 1. Specifically, this step may be performed by the management module 1234.

The fourth training dataset may include fourth training data. The fourth training data includes an eigenvalue of a feature of a fourth sample operator and a true value of the execution cost of the fourth sample operator.

Optionally, the training data in the fourth training dataset is determined based on the parameter value of the running parameter of the second operator. The fourth sample operator may be the second operator. In this case, the eigenvalue of the feature of the fourth sample operator and the true value of the execution cost of the fourth sample operator may be determined based on the parameter value of the running parameter of the second operator. A feature of the fourth sample operator belongs to the feature set.

It should be noted that the training data in the fourth training dataset is determined based on the parameter value of the running parameter of the second operator. It may be understood that all training data in the fourth training dataset is determined based on the parameter value of the running parameter of the second operator, or some training data in the fourth training dataset is determined based on the parameter value of the running parameter of the second operator.

"Fourth" in the fourth training data is merely used to specify that the training data belongs to the fourth training dataset, and has no other limitation function. In other words, all data in the fourth training dataset is the fourth training data. "Fourth" in "fourth sample operator" is merely used to specify that the sample operator belongs to the fourth training dataset, and has no other limitation function. In other words, all sample operators in the fourth training dataset are fourth sample operators.

According to the solution in this embodiment of this application, the running parameter of the operator may be collected in an execution process of the target execution plan, and feature selection is performed based on the collected running parameter of the operator, to update the target feature. In this way, a more accurate target feature can be obtained, so that the cost model can better adapt to a current running environment, for example, better adapt to a data distribution, a load distribution, or a system hardware environment in a current database system, to improve adaptability of the cost model, thereby ensuring accuracy of predicting the cost model.

Optionally, the training data in the fourth training dataset is determined based on the parameter value that is of the running parameter of the second operator and that is stored in the external memory.

When the target feature changes, that is, input of the cost model changes, the cost model may need to be adjusted accordingly. Feature selection may be performed before hyperparameter optimization. In other words, after the target feature of the operator is adjusted, that is, after input of the model is adjusted, hyperparameter optimization may be performed.

Feature selection may be implemented in a plurality of manners.

For example, combinations of different features in the feature set of the operator are enumerated, and a proper feature combination is selected from the combinations. A feature in the combination is the target feature of the operator.

The enumeration manner leads to a large search space, and consequently efficiency of feature selection is low.

For example, feature selection may be implemented through principal component analysis (principal component analysis, PCA).

This manner helps determine a key feature from the feature set of the operator.

For example, feature selection may be implemented based on a decision tree.

Optionally, the target feature of the operator may be determined through feature selection performed on the feature set based on the decision tree.

The following describes an example of a process of performing selection feature based on the decision tree.

A plurality of intervals are obtained through division based on a value range of true values of execution costs of all fourth sample operators in the fourth training dataset. The plurality of intervals may be used as a plurality of categories. Feature selection is performed step by step based on the decision tree, so that the true values of the execution costs of all the fourth sample operators can be classified into correct categories as much as possible based on features selected in the steps.

For example, the execution cost of the operator may be an execution time of the operator. A true value of the execution time of the fourth sample operator is an actual execution time. For example, a range of the actual execution times of all the fourth sample operators in the fourth training dataset is within an interval $[10^0, 10^4]$, and the interval may be divided into four subintervals: $[10^0, 10^1]$, $[10^1, 10^2]$, $[10^2, 10^3]$, and $[10^3, 10^4]$. The four subintervals are used as four categories.

For example, a standard of measuring division accuracy may be a Gini impurity, an information gain, or the like.

The following uses an example in which feature selection is performed based on the Gini impurity for description. A Gini impurity of the fourth training dataset is calculated under a condition of each feature, and a feature under which the Gini impurity of the fourth training dataset is smallest is selected. In the decision tree, the feature is used as a split node at a first layer. For another feature, a same algorithm is used to perform recursive calculation to generate a split node at another layer of the decision tree until a termination condition is met.

Specifically, a feature and a boundary value corresponding to the feature are selected from the feature set, and the fourth training dataset is divided into a plurality of subsets based on the feature and the boundary value corresponding to the feature. Gini impurities of the plurality of subsets are calculated. A Gini impurity of each subset obtained through division based on each feature is calculated in this manner. A feature under which the Gini impurity of each subset obtained through division is smallest and a boundary value corresponding to the feature are selected. A label of each subset is determined by a category that corresponds to a largest number of elements in the subset. A higher proportion of elements in the subset that have a same label as the subset indicates a lower impurity of the subset. Categories of the elements are the plurality of intervals obtained through division based on the value range of labels corresponding to all the fourth training samples in the fourth training dataset.

The foregoing manner is deduced by analogy, and recursive calculation is performed until the termination condition is met. One or more features selected in this manner may be considered as one or more features that have greatest impact on accuracy of a classification result. The termination condition can be set as required. For example, the termination condition may be that a Gini impurity of each subset obtained through division is less than or equal to a specified threshold. For another example, the termination condition may be that a number of selected features is greater than or equal to a specified threshold.

Optionally, the method 200 further includes: training the cardinality model based on a fifth training dataset; and replacing the current cardinality model with a trained cardinality model.

For related descriptions of the fifth training dataset, refer to the training dataset of the cardinality model in the foregoing.

Optionally, training data in the fifth training dataset is determined based on the parameter value of the running parameter of the second operator. The sample operator query condition may be a second operator query condition. The actual selection rate corresponding to the sample operator query condition may be determined based on an actual number of query rows of the second operator.

For a specific training process, refer to the foregoing related descriptions. To avoid repetition, details are not described herein again.

According to the solution in this embodiment of this application, the running parameter of the operator may be collected in an execution process of the target execution plan, and the cardinality model is updated based on the collected running parameter of the operator. In this way, the cardinality model can better adapt to a current running environment, for example, better adapt to a data distribution, a load distribution, or a system hardware environment in a current database system, to improve adaptability of the cardinality model, thereby ensuring accuracy of predicting the cardinality model.

Optionally, the training data in the fifth training dataset is determined based on the parameter value that is of the running parameter of the second operator and that is stored in the external memory.

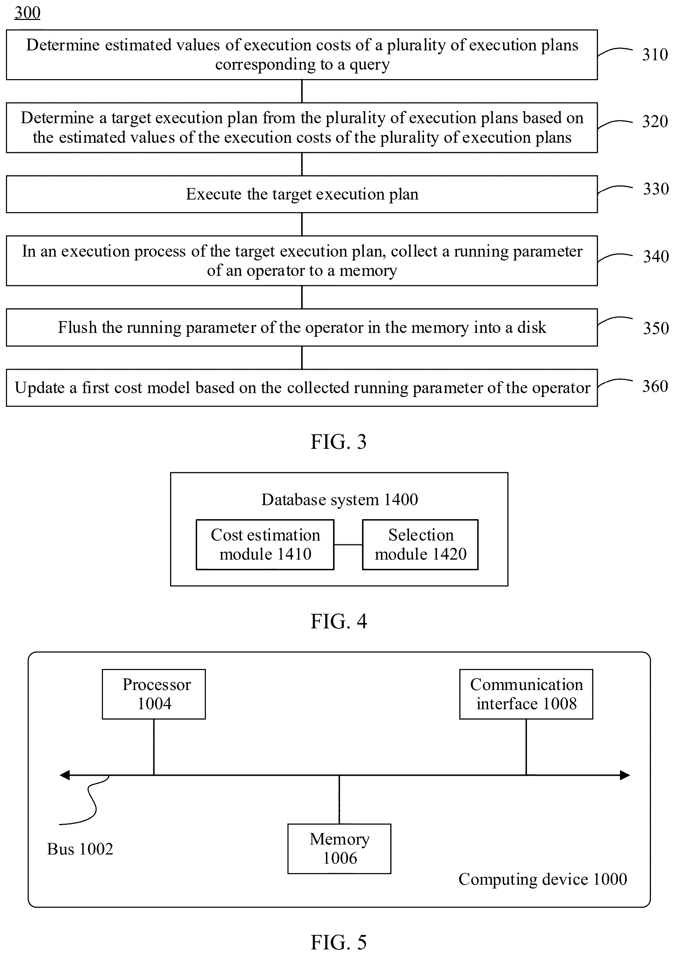

FIG. 3 is a schematic flowchart of another method for selecting an execution plan according to an embodiment of this application. The method shown in FIG. 3 may be considered as a specific implementation of the method shown in FIG. 2. It should be understood that an example in FIG. 3 is merely intended to help a person skilled in the art understand this embodiment of this application, instead of limiting this embodiment of this application to a specific value or a specific scenario of the example. To avoid repetition, some descriptions are appropriately omitted when the method 300 is described.

For ease of understanding, the following describes the method 300 with reference to the system shown in FIG. 1. It should be understood that the method 300 shown in FIG. 3 may also be performed by another system. This is not limited in embodiments of this application.

For example, when a database system is started, a management process may be created, or a management module may be started. In this way, the management module may perform offline or online adaptive updating on a cost model.

The method 300 may include the following steps.

310: Determine estimated values of execution costs of a plurality of execution plans corresponding to a query.

Step 310 may be triggered by a query submitted by a user. For example, the plurality of execution plans are generated after the query passes through a parser in the database system. The optimizer 1100 may invoke the cost estimation module 1110 to determine the estimated values of the execution costs of the plurality of execution plans corresponding to the query.

For example, step 310 may be implemented by using step 311 to step 313.

311: Calculate an eigenvalue value of a target feature of each operator in an execution plan based on a feature table.

The feature table stores a calculation function of the target feature.

For example, the eigenvalue determining module 1111 in the cost estimation module 1110 may read the feature table from a memory. The calculation function in the feature table may be a system function. The system function is a fixed function in the system. When the database system is started, the calculation function can be loaded from a system table to the feature table in the memory. During initialization, the feature table may include calculation functions of all features in a feature set. Then, the management module 1234 may be used for updating.

In the method 300, a scan operator is mainly used as an example for description. For example, the scan operator may be an index scan (index scan) operator, a sequence scan (sequence scan) operator, or a bitmap scan (bitmap scan) operator.

Table 1 shows an example of a part of target features of the index scan operator.

Table 1

| Feature name | Description | Value setting |
|---|---|---|
| Disable path (disable path) | Whether the path is a parameterized path | If the path is the parameterized path or index scanning is disabled, a value is true |
| btreeselectivity | Query condition selection rate | Invoke a value between 0 and 1 determined by a cardinality model |
| loopcount | Number of cycles executed for index scanning | Determined based on an execution plan |
| spc_seq_page_cost | Sequence access cost | Specified value |

312: Input the eigenvalue of the target feature of each operator into a first cost model for processing, to obtain an estimated value of an execution cost of each operator.

The database system may include one cost model, or may include a plurality of cost models.

For example, the database system may include only the first cost model.

Alternatively, the database system may include the first cost model and another model. The another model may be a model that can be obtained without training. In this case, when the database system is started, the estimated value of the execution cost of the operator may be determined by using the another cost model, and a running parameter of the operator is collected. A first training dataset is determined based on the collected running parameter of the operator, and the first cost model is obtained through training by using the first training dataset. Then, the estimated value of the execution cost of the operator may be determined by using the first cost model. In this way, even if no sufficient training data is collected, cost estimation can still be implemented. In other words, the solution in this embodiment of this application can support cold start of the cost model.

313: Determine an estimated value of an execution cost of the execution plan based on the estimated value of the execution cost of each operator.

320: Determine a target execution plan from the plurality of execution plans based on the estimated values of the execution costs of the plurality of execution plans.

For example, an estimated value of an execution cost of the target execution plan is a smallest value in the estimated values of the execution costs of the plurality of execution plans.

For example, the selection module 1120 in the optimizer 1100 may select an execution plan with a smallest estimated value, that is, the target execution plan, from the plurality of execution plans, and deliver the target execution plan to an executor for execution.

330: Execute the target execution plan.

For example, the executor 1200 executes the target execution plan.

340: In an execution process of the target execution plan, collect the running parameter of the operator to the memory.

For example, in the execution process, if it is found that a difference between the estimated value of the execution cost of the operator and a true value of the execution cost of the operator is large, the collection module 1220 may collect execution context information of the operator to a hash table of the memory, and bind a parameter value of a current system parameter, that is, a parameter value of a system resource usage parameter. The execution context information of the operator may include one or more of a startup time of the operator, a total execution time of the operator, an actual number of rows read by the operator, a degree of parallelism of the operator, an operator type, or the like. The system parameter includes one or more of an IO read amount, an IO write amount, CPU usage, memory usage, or the like.

350: Flush the running parameter of the operator in the memory into a disk.

For example, the collection module 1220 periodically flushes the running parameter of the operator in the memory into the disk. For example, the collection module 1220 flushes the running parameter of the operator in the memory into the disk every 10 minutes.

Alternatively, when a number of operators in the memory exceeds a specified threshold, the collection module 1210 may flush the running parameter of the operator in the memory into the disk.

Further, the memory may retain latest 1/5 data as short-term data.

360: Update the first cost model based on the collected running parameter of the operator.

For example, the management module may update the first cost model based on the collected running parameter of the operator. An updated first cost model may be updated to the memory and the system table.

For example, updating of the first cost model may be performed in two different periods: short-term updating and long-term updating. For example, short-term updating may be performing incremental training on the first cost model based on short-term data in the memory. For example, long-term updating may be performing hyperparameter optimization on the first cost model based on long-term data in the disk. For another example, long-term updating may be performing feature selection and hyperparameter optimization on the first cost model based on long-term data in the disk. During long-term updating, hyperparameter optimization may change a structure and a type of the model, and the model needs to be retrained. The operator stored in the memory is an operator with a large estimation error. If a number of collected operators is large, it indicates that the current first cost model is not suitable. For example, if a number of operators with a large estimation error increases significantly, short-term updating may be performed. After updating, if the number of operators with a large estimation error still quickly increases, long-term updating may be performed. For details, refer to the descriptions in the method 200. The details are not described herein again.

The solutions in embodiments of this application have a wide application scope, and may be applicable to various types of database systems. The solutions in embodiments of this application help improve estimation accuracy while ensuring estimation efficiency.

The following describes apparatuses in embodiments of this application with reference to FIG. 4 to FIG. 6. It should be understood that the apparatuses described below can perform the method in the foregoing embodiments of this application. To avoid unnecessary repetition, repeated descriptions are appropriately omitted when the apparatuses in embodiments of this application are described below.

FIG. 4 is a block diagram of a database system 1400 according to an embodiment of this application. The database system 1400 may be implemented by using software, hardware, or a combination thereof. The database system 1400 provided in this embodiment of this application may implement the method procedure shown in FIG. 2 or FIG. 3 in embodiments of this application.

The database system 1400 includes a cost estimation module 1410 and a selection module 1420. The cost estimation module 1410 is configured to determine an estimated value of an execution cost of each execution plan based on an estimated value of an execution cost of an operator in each execution plan in a plurality of execution plans corresponding to a query submitted by a user, where an estimated value of an execution cost of a first operator in a first execution plan in the plurality of execution plans is obtained by inputting an eigenvalue of a target feature of the first operator into a first cost model for processing, the first cost model is deployed on the database system, and the first cost model is obtained through training based on a first training dataset. The selection module 1420 is configured to determine a target execution plan from the plurality of execution plans based on the estimated values of the execution costs of the plurality of execution plans.

In addition, the apparatus embodiments and the method embodiments provided in the foregoing embodiments belong to a same concept. For specific implementation processes thereof, refer to the method embodiments. Details are not described herein again.

The apparatus shown in FIG. 4 may be embodied in a form of a functional module. The term "module" herein may be implemented in a form of software and/or hardware. This is not specifically limited.

Modules in the examples described in embodiments of this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It should be noted that when the apparatus provided in the foregoing embodiment performs the foregoing method, division into the foregoing functional modules is merely used as an example for description. During actual application, the foregoing functions may be allocated as required to different functional modules for implementation, that is, an internal structure of the apparatus is divided into different functional modules to implement all or some of the functions described above. For example, in the database system 1400, the cost estimation module may be configured to perform any step in the foregoing method, and the selection module may be configured to perform any step in the foregoing method. Steps implemented by each module may be specified as required, and all functions of the foregoing apparatus are implemented by using each module to implement different steps in the foregoing method.

The following describes, in detail with reference to FIG. 5, a computing device provided in an embodiment of this application.

FIG. 5 is a diagram of an architecture of a computing device 1000 according to an embodiment of this application.

As shown in FIG. 5, the computing device 1000 includes a bus 1002, a processor 1004, a memory 1006, and a communication interface 1008. The processor 1004, the memory 1006, and the communication interface 1008 communicate with each other through the bus 1002. The computing device 1000 may be a server or a terminal device. It should be understood that quantities of processors and memories in the computing device 1000 are not limited in this application.

The bus 1002 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used for representation in FIG. 5, but it does not mean that there is only one bus or only one type of bus. The bus 1004 may include a path for transmitting information between components (for example, the memory 1006, the processor 1004, and the communication interface 1008) of the computing device 1000.

The processor 1004 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1006 may include a volatile memory (volatile memory), for example, a random access memory (random access memory, RAM). The processor 1004 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 1006 stores executable program code, and the processor 1004 executes the executable program code to separately implement functions of the modules in FIG. 4, so as to implement the method in embodiments of this application. In other words, the memory 1006 stores instructions used to perform the method in embodiments of this application.

The communication interface 1003 uses a transceiver module, for example, but not limited to, a network interface card or a transceiver, to implement communication between the computing device 1000 and another device or a communication network.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

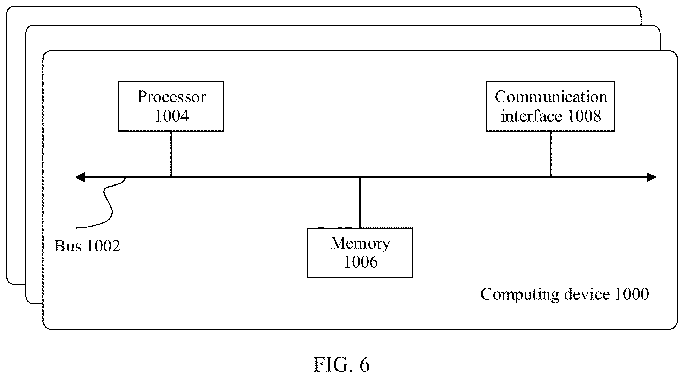

As shown in FIG. 6, the computing device cluster includes at least one computing device 1000. The computing device cluster may be configured to perform the method in embodiments of this application, for example, the method shown in FIG. 2 or FIG. 3.

A memory 1006 in the one or more computing devices 1000 in the computing device cluster may store same instructions used to perform the method in embodiments of this application.

In some possible implementations, the memory 1006 in the one or more computing devices 1000 in the computing device cluster may also separately store some instructions used to perform the method in embodiments of this application. In other words, a combination of the one or more computing devices 1000 may jointly execute instructions used to perform the method in embodiments of this application.

It should be noted that memories 1006 in different computing devices 1000 in the computing device cluster may store different instructions, and the different instructions are separately used to perform some functions of the apparatus 1400. In other words, the instructions stored in the memories 1006 in the different computing devices 1000 may implement functions of one or more of the cost estimation module and the selection module.

An embodiment of this application further provides a computer program product including instructions. The computer program product may be software or a program product that includes the instructions and that can be run on a computing device or stored in any usable medium. When the computer program product runs on at least one computing device, the at least one computing device is enabled to perform the method in embodiments of this application.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions indicate the method in embodiments of this application.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or a part of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A method for selecting an execution plan, wherein the method is applied to a database system, and the method comprises:

obtaining a plurality of execution plans corresponding to a query submitted by a user;
determining an estimated value of an execution cost of each execution plan based on an estimated value of an execution cost of an operator in each execution plan in the plurality of execution plans, wherein an estimated value of an execution cost of a first operator in a first execution plan in the plurality of execution plans is obtained by inputting an eigenvalue of a target feature of the first operator into a first cost model for processing, the first cost model is deployed on the database system, and the first cost model is obtained through training based on a first training dataset; and
determining a target execution plan from the plurality of execution plans based on the estimated values of the execution costs of the plurality of execution plans.

2. The method according to claim 1, wherein the first training dataset comprises one or more pieces of first training data, and the first training data comprises an eigenvalue of a target feature of a first sample operator and an execution cost of the first sample operator in an actual execution process.

3. The method according to claim 1 or 2, wherein the target feature of the first operator comprises at least one of the following: system central processing unit CPU usage corresponding to the first operator, input/output IO bandwidth corresponding to the first operator, or memory usage corresponding to the first operator.

4. The method according to any one of claims 1 to 3, wherein the target feature of the first operator comprises a cardinality of the first operator, an estimated value of the cardinality of the first operator is determined by using a cardinality model, and the cardinality model is a mixture model.

5. The method according to any one of claims 1 to 4, wherein the method further comprises:

executing the target execution plan; and
collecting a parameter value of a running parameter of a second operator in the target execution plan, wherein the parameter value of the running parameter of the second operator is used to train or optimize the first cost model.

6. The method according to claim 5, wherein a difference between an estimated value of an execution cost of the second operator and a true value of the execution cost of the second operator is greater than or equal to a first threshold, and the estimated value of the execution cost of the second operator is obtained by inputting an eigenvalue of a target feature of the second operator into the first cost model for processing.

7. The method according to claim 5 or 6, wherein the running parameter of the second operator comprises at least one of the following: system central processing unit CPU usage corresponding to the second operator, input/output IO bandwidth corresponding to the second operator, or memory usage corresponding to the second operator.

8. The method according to any one of claims 5 to 7, wherein the running parameter of the second operator comprises execution context information of the second operator; and collecting the parameter value of the running parameter of the second operator in the target execution plan comprises:

attempting to obtain a lock before collecting the parameter value of the running parameter of the second operator; and
when the lock is obtained, collecting the parameter value of the running parameter of the second operator.

9. The method according to any one of claims 5 to 8, wherein the method further comprises:

performing incremental training or full training on the first cost model based on a second training dataset, to obtain a second cost model, wherein training data in the second training dataset is determined based on the parameter value of the running parameter of the second operator; and
replacing the first cost model with the second cost model.

10. The method according to any one of claims 5 to 8, wherein the method further comprises:

performing hyperparameter optimization on the first cost model based on a third training dataset, to obtain a third cost model, wherein training data in the third training dataset is determined based on the parameter value of the running parameter of the second operator; and
replacing the first cost model with the third cost model.

11. The method according to claim 10, wherein the method further comprises:

performing feature selection on a feature set based on a fourth training dataset, wherein training data in the fourth training dataset is determined based on the parameter value of the running parameter of the second operator; and
replacing the target feature with a selected feature.

12. A database system, comprising:

a cost estimation module, configured to determine an estimated value of an execution cost of each execution plan based on an estimated value of an execution cost of an operator in each execution plan in a plurality of execution plans corresponding to a query submitted by a user, wherein an estimated value of an execution cost of a first operator in a first execution plan in the plurality of execution plans is obtained by inputting an eigenvalue of a target feature of the first operator into a first cost model for processing, the first cost model is deployed on the database system, and the first cost model is obtained through training based on a first training dataset; and
a selection module, configured to determine a target execution plan from the plurality of execution plans based on the estimated values of the execution costs of the plurality of execution plans.

13. The database system according to claim 12, wherein the first training dataset comprises one or more pieces of first training data, and the first training data comprises an eigenvalue of a target feature of a first sample operator and an execution cost of the first sample operator in an actual execution process.

14. The database system according to claim 12 or 13, wherein the target feature of the first operator comprises a system parameter corresponding to the first operator, and the system parameter corresponding to the first operator comprises at least one of the following: system central processing unit CPU usage corresponding to the first operator, input/output IO bandwidth corresponding to the first operator, or memory usage corresponding to the first operator.

15. The database system according to any one of claims 12 to 14, wherein the target feature of the first operator comprises a cardinality of the first operator, an estimated value of the cardinality of the first operator is determined by using a cardinality model, and the cardinality model is a mixture model.

16. The database system according to any one of claims 12 to 15, wherein the database system further comprises:

an execution module, configured to execute the target execution plan; and
a collection module, configured to collect a parameter value of a running parameter of a second operator in the target execution plan, wherein the parameter value of the running parameter of the second operator is used to train or optimize the first cost model.

17. The database system according to claim 16, wherein a difference between an estimated value of an execution cost of the second operator and a true value of the execution cost of the second operator is greater than or equal to a first threshold, and the estimated value of the execution cost of the second operator is obtained by inputting an eigenvalue of a target feature of the second operator into the first cost model for processing.

18. The database system according to claim 16 or 17, wherein the running parameter of the second operator comprises a system parameter corresponding to the second operator, and the system parameter corresponding to the second operator comprises at least one of the following: system central processing unit CPU usage corresponding to the second operator, input/output IO bandwidth corresponding to the second operator, or memory usage corresponding to the second operator.

19. The database system according to any one of claims 16 to 18, wherein the running parameter of the second operator comprises execution context information of the second operator; and the collection module is specifically configured to:

attempt to obtain a lock before collecting the parameter value of the running parameter of the second operator; and
when the lock is obtained, collect the parameter value of the running parameter of the second operator.

20. The database system according to any one of claims 16 to 19, wherein the database system further comprises a first management module, configured to:

perform incremental training or full training on the first cost model based on a second training dataset, to obtain a second cost model, wherein training data in the second training dataset is determined based on the parameter value of the running parameter of the second operator; and
replace the first cost model with the second cost model.

21. The database system according to any one of claims 16 to 19, wherein the database system further comprises a second management module, configured to:

perform hyperparameter optimization on the first cost model based on a third training dataset, to obtain a third cost model, wherein training data in the third training dataset is determined based on the parameter value of the running parameter of the second operator; and
replace the first cost model with the third cost model.

22. The database system according to claim 21, wherein the database system further comprises a third management module, configured to:

> perform feature selection on a feature set based on a fourth training dataset, wherein training data in the fourth training dataset is determined based on the parameter value of the running parameter of the second operator; and replace the target feature with a selected feature.

23. A computing device cluster, comprising at least one computing device, wherein each computing device comprises a processor and a memory; and
the processor of the at least one computing device is configured to execute instructions stored in the memory in the at least one computing device, so that the computing device cluster performs the method according to any one of claims 1 to 11.

24. A computer-readable storage medium, comprising computer program instructions, wherein when the computer program instructions are executed by a computing device cluster, the computing device cluster performs the method according to any one of claims 1 to 11.

25. A computer program product comprising instructions, wherein when the instructions are run by a computing device cluster, the computing device cluster is enabled to perform the method according to any one of claims 1 to 11.

Optimizer 1100

Cost estimation module 1110

| Eigenvalue determining module 1111 | Operator cost estimation module 1112 |

Selection module 1120

Executor 1200

Execution module 1210

Collection module 1220

Context information collection module 1221

System parameter collection module 1222

| Management module 1231 |

| Management module 1232 |

| Management module 1233 |

| Management module 1234 |

First memory 1300     Second memory 1400

FIG. 1

200

| Obtain a query submitted by a user | 210 |

| Generate a plurality of execution plans corresponding to the query | 220 |

| Determine an estimated value of an execution cost of each execution plan based on an estimated value of an execution cost of an operator in each execution plan in the plurality of execution plans, where an estimated value of an execution cost of a first operator in a first execution plan in the plurality of execution plans is obtained by inputting an eigenvalue of a target feature of the first operator into a cost model for processing | 230 |

| Determine a target execution plan based on the estimated values of the execution costs of the plurality of execution plans | 240 |

| Execute the target execution plan | 250 |

| Collect a parameter value of a running parameter of a second operator in the target execution plan | 260 |

FIG. 2

300

| Determine estimated values of execution costs of a plurality of execution plans corresponding to a query | 310 |

| Determine a target execution plan from the plurality of execution plans based on the estimated values of the execution costs of the plurality of execution plans | 320 |

| Execute the target execution plan | 330 |

| In an execution process of the target execution plan, collect a running parameter of an operator to a memory | 340 |

| Flush the running parameter of the operator in the memory into a disk | 350 |

| Update a first cost model based on the collected running parameter of the operator | 360 |

FIG. 3

Database system 1400

| Cost estimation module 1410 | Selection module 1420 |

FIG. 4

Processor 1004

Communication interface 1008

Bus 1002

Memory 1006

Computing device 1000

FIG. 5

| Processor 1004 | Communication interface 1008 |

Bus 1002

Memory 1006

Computing device 1000

FIG. 6

## INTERNATIONAL SEARCH REPORT

| International application No. |
| --- |
| **PCT/CN2023/125468** |

| A. | CLASSIFICATION OF SUBJECT MATTER |
| --- | --- |

G06F16/242(2019.01)i;  G06N3/0464(2023.01)i

According to International Patent Classification (IPC) or to both national classification and IPC

| B. | FIELDS SEARCHED |
| --- | --- |

Minimum documentation searched (classification system followed by classification symbols)

IPC:  G06F,  G06N

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 查询, 执行计划, 代价, 基数, 行数, 训练, 优化, 算子, 占用率, 带宽, 增量, 全量, 混合, 真值, 实际, 真实, 超参数, 特征选择, query, execution plan, cost, cardinality, row, train+, optimiz+, operator, occupancy, bandwidth, incremental training, full training, hybrid, true, hyper parameter, feature selection, CPU, IO

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | CN 115617830 A (CHINA MOBILE GROUP HEILONGJIANG CO., LTD. et al.) 17 January 2023 (2023-01-17) <br> description, paragraphs [0043]-[0083] and [0091]-[0097] | 1-4, 12-15, 23-25 |
| Y | CN 115617830 A (CHINA MOBILE GROUP HEILONGJIANG CO., LTD. et al.) 17 January 2023 (2023-01-17) <br> description, paragraphs [0043]-[0083] and [0091]-[0097] | 5-11, 16-22 |
| Y | US 2022004553 A1 (INTERNATIONAL BUSINESS MACHINES CORP.) 06 January 2022 (2022-01-06) <br> description, paragraphs [0010]-[0081] | 5-11, 16-22 |
| A | CN 114996303 A (PINGCAP XINGCHEN (BEIJING) TECHNOLOGY CO., LTD.) 02 September 2022 (2022-09-02) <br> entire document | 1-25 |
| A | CN 113010547 A (UNIVERSITY OF ELECTRONIC SCIENCE AND TECHNOLOGY OF CHINA) 22 June 2021 (2021-06-22) <br> entire document | 1-25 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **27 December 2023** | **02 January 2024** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/125468**

### C.    DOCUMENTS CONSIDERED TO BE RELEVANT

| Category* | Citation of document, with indication, where appropriate, of the relevant passages | Relevant to claim No. |
|---|---|---|
| A | CN 114116778 A (CHENGDU BRANCH OF CHINA ELECTRONIC PORT DATA CENTER et al.) 01 March 2022 (2022-03-01)<br>entire document | 1-25 |
| A | CN 114911823 A (HARBIN INSTITUTE OF TECHNOLOGY) 16 August 2022 (2022-08-16)<br>entire document | 1-25 |
| A | US 2019095785 A1 (AMAZON TECHNOLOGIES, INC.) 28 March 2019 (2019-03-28)<br>entire document | 1-25 |
| A | US 2019370684 A1 (SAS INSTITUTE INC.) 05 December 2019 (2019-12-05)<br>entire document | 1-25 |

Form PCT/ISA/210 (second sheet) (July 2022)

**INTERNATIONAL SEARCH REPORT**
Information on patent family members

International application No.

**PCT/CN2023/125468**

| Patent document cited in search report | | | Publication date (day/month/year) | Patent family member(s) | | | Publication date (day/month/year) |
|---|---|---|---|---|---|---|---|
| CN | 115617830 | A | 17 January 2023 | None | | | |
| US | 2022004553 | A1 | 06 January 2022 | JP | 2023530947 | A | 20 July 2023 |
| | | | | WO | 2022003469 | A1 | 06 January 2022 |
| | | | | CN | 115769198 | A | 07 March 2023 |
| CN | 114996303 | A | 02 September 2022 | None | | | |
| CN | 113010547 | A | 22 June 2021 | None | | | |
| CN | 114116778 | A | 01 March 2022 | None | | | |
| CN | 114911823 | A | 16 August 2022 | None | | | |
| US | 2019095785 | A1 | 28 March 2019 | WO | 2019067374 | A1 | 04 April 2019 |
| US | 2019370684 | A1 | 05 December 2019 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310096561